# EUROPEAN PATENT SPECIFICATION

(11) **EP 2 781 529 B1**
(45) Date of publication and mention of the grant of the patent: **08.07.2020**
(21) Application number: 14152489.2
(22) Date of filing: 17.02.2011
(51) Int. Cl.: C08G 18/00, C08G 18/42, C08G 101/00, C08G 18/76, C08J 9/14, C08G 63/66, C08G 18/40, C08G 18/48, C08G 18/63, C08G 18/28, C08J 9/00, C08J 9/12

(54) **Strength-improving agent for production of polyurethane foam**
FESTIGKEITSERHÖHUNGSMITTEL ZUR HERSTELLUNG EINES POLYURETHANSCHAUMSTOFFS
Agent d'amélioration de la résistance pour la production de mousse en polyuréthane

(30) Priority: 23.02.2010 JP 2010037634; 30.06.2010 JP 2010150052
(43) Date of publication of application: 24.09.2014
(62) Divisional of application: 11747001.3
(73) Proprietor: Sanyo Chemical Industries, Ltd., Kyoto-shi, Kyoto 605 (JP)
(72) Inventor: Kabu, Koji, Kyoto-shi Kyoto, 605-0995 (JP); Hirano, Tomohisa, Kyoto-shi Kyoto, 605-0995 (JP); Shindo, Yasuhiro, Kyoto-shi Kyoto, 605-0995 (JP); Sugahara, Shogo, Kyoto-shi Kyoto, 605-0995 (JP)
(74) Representative: Kotitschke, Ralf Thomas

(56) References cited:
- DATABASE WPI Week 199706 Thomson Scientific, London, GB; AN 1997-061876 XP002728754, & JP H08 311183 A (MITSUI TOATSU CHEM INC) 26 November 1996 (1996-11-26)
- DATABASE WPI Week 199220 Thomson Scientific, London, GB; AN 1992-163769 XP002699583, & JP H04 103623 A (SAKATA INKS CO LTD) 6 April 1992 (1992-04-06)

## Description

### TECHNICAL FIELD

The present invention relates to a strength-improving agent for the production of polyurethane foam.

### BACKGROUND ART

Recently, environmental consideration and cost reduction have been strongly required, and a decrease in density of a polyurethane foam is requested. For example, in the application of vehicles, a decrease in density of a soft polyurethane foam is required so as to cope with fuel mileage regulations. Also in the application of heat insulating materials, weight saving is desired for the purpose of cost reduction and environmental consideration.

At present, in order to respond to a request of a decrease in density, the amount of water used as a foaming agent tends to increase. An increase in the use amount of water (Non-Patent Document 1) enables an increase in the amount of a carbonic acid gas generated during the production of a foam and thus it is effective to decrease the density of the soft polyurethane foam. However, when the density of the foam decreases, the hardness of the foam decreases. Specific techniques for improving the hardness of the polyurethane foam include a method in which the use amount of a crosslinking agent is increased (Non-Patent Document 1), and a method in which a polymer is dispersed in a resin (Patent Document 1), for example. In these methods, however, problems, for example, insufficient mechanical properties such as elongation and tensile strength of the soft polyurethane foam remain, and thus a soft polyurethane foam in which hardness is improved while maintaining mechanical properties is desired.

It has also been proposed to use a relatively large amount of water as a foaming agent, together with a small amount of methylene chloride so as to decrease the density. However, according to this method, the hardness of the obtained foam increases and this method cannot be employed from the viewpoint of obtaining a soft urethane foam. Therefore, there has also been proposed a method in which a monool or a diol is used as a component of a polyol. However, according to this method, there arises a problem that other physical properties are impaired, for example, compression permanent strain of the obtained foam increases (Patent Document 2).

### PRIOR ART DOCUMENTS

### PATENT DOCUMENTS

Patent Document 1: JP-A-9-309937
Patent Document 2: JP-A-6-65346

### NON-PATENT DOCUMENT

Non-Patent Document 1: Keiji Iwata, "Polyurethane Resin Handbook", THE NIKKAN KOGYO SHIMBUN, LTD., published on May 20, 1987, 1st edition, page 32

JPH08311183 (DATABASE WPIWeek 199706 Thomson Scientific, London, GB) discloses ester polyols usable as raw materials for hard polyurethane foams. The ester polyols having a hydroxyl value of KOH 300-600 mg/g and an acid value of KOH 5 mg/g or less are prepared by reacting an OH-containing carboxylic acid obtained by reaction of carboxylic cyclic anhydride with a polyvalent active hydrogen compound with an alkylene oxide in the presence of an amine catalyst.

### SUMMARY OF THE INVENTION

### PROBLEMS TO BE SOLVED BY THE INVENTION

An object of the present invention is to provide a strength-improving agent for the production of polyurethane foam which enables the production of a polyurethane foam having high mechanical properties (tensile strength, tear strength, and compression hardness), a polyol composition for the production of polyurethane foam containing a strength-improving agent, and a method for producing a polyurethane foam using the strength-improving agent or the polyol composition.

### SOLUTIONS TO THE PROBLEMS

The present inventors have intensively studied so as to solve the above-mentioned problems, and found that a polyurethane foam having high mechanical properties (tensile strength and compression hardness) can be obtained by using a strength-improving agent for the production of polyurethane foam having a specific structure, and thus leading to the present invention.

That is, a first aspect of the present invention is directed to a strength-improving agent (A) for the production of polyurethane foam, represented by the general formula (I):

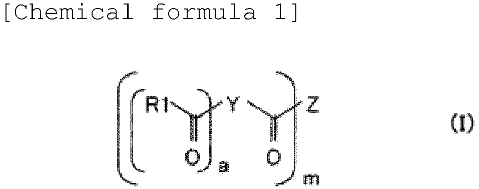

wherein R1 represents a residue derived from an active-hydrogen containing compound by the removal of one active hydrogen atom, and multiple R1s may be the same or different; Y represents a residue derived from an at least trivalent aromatic polycarboxylic acid (C) by the removal of the carboxyl groups, and the aromatic ring of Y is composed of carbon atoms, and substituents on the aromatic ring may be hydrogen atoms or other substituents and at least one of the substituents is a hydrogen atom; a is an integer satisfying a relation: 2 ≤ a ≤ (number of substituents on the aromatic ring - 2) ; Z represents a residue derived from an at least m-valent active-hydrogen containing compound by the removal of m active hydrogen atoms; some R1s and Z may be the same, with the proviso that at least one R1 is different from Z; and m represents an integer of 1 to 10.

A second aspect of the present invention is directed to a polyol composition (B) for the production of polyurethane foam, comprising the above-mentioned strength-improving agent (A) for the production of polyurethane foam, and a polyol (P) as specified in claim 1.

A third aspect of the present invention is directed to a method for producing a polyurethane foam, which comprises reacting the above-mentioned strength-improving agent (A) for the production of polyurethane foam or the above-mentionedpolyol composition (B) for the production of polyurethane foam with an organic polyisocyanate component (D) in the presence of a foaming agent, a catalyst and a foam stabilizer.

### EFFECTS OF THE INVENTION

In the case where the strength-improving agent for the production of polyurethane foam of the present invention is used, it is possible to obtain a polyurethane foam having high mechanical properties (tensile strength, tear strength, and compression hardness).

### MODES FOR CARRYING OUT THE INVENTION

The strength-improving agent for the production of polyurethane foam of the present invention has a structure represented by the following general formula (I).

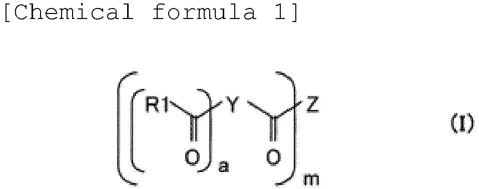

In the general formula (I), R1 represents a residue derived from an active-hydrogen containing compound by the removal of one active hydrogen atom. Examples of the active-hydrogen containing compound include a hydroxyl group-containing compound, an amino group-containing compound, a carboxyl group-containing compound, a thiol group-containing compound and a phosphoric acid compound; and a compound having two or more kinds of active hydrogen-containing functional groups in the molecule. These active-hydrogen containing compounds may be used alone or in a mixture of multiple kinds . That is, multiple R1s may be the same or different.

Examples of the hydroxyl group-containing compound include a monohydric alcohol, a di- to octahydric polyhydric alcohol, a phenol, and a polyhydric phenol. Specific examples thereof include monohydric alcohols such as methanol, ethanol, butanol, octanol, benzyl alcohol and naphthylethanol; dihydric alcohols such as ethylene glycol, propylene glycol, 1,3- and 1,4-butanediol, 1,6-hexanediol, 1,10-decanediol, diethylene glycol, neopentyl glycol, cyclohexanediol, cyclohexanedimethanol, 1,4-bis(hydroxymethyl)cyclohexane and 1,4-bis(hydroxyethyl)benzene; trihydric alcohols such as glycerin and trimethylolpropane; tetra- to octahydric alcohols of sucrose, glucose, mannose, fructose, methyl glucoside and derivatives thereof such as pentaerythritol, sorbitol, mannitol, sorbitan, diglycerin and dipentaerythritol; phenols such as phenol, fluoroglucin, cresol, pyrogallol, catechol, hydroquinone, bisphenol A, bisphenol F, bisphenol S, 1-hydroxynaphthalene, 1,3,6,8-tetrahydroxynaphthalene, anthrol, 1,4,5,8-tetrahydroxyanthracene and 1-hydroxypyrene; a polybutadiene polyol; a castor oil-based polyol; a polyfunctional (for example, having a number of functional groups of 2 to 100) polyol such as a (co)polymer of hydroxyalkyl (meth)acrylate and polyvinyl alcohol; condensates (novolaks) of a phenol and formaldehyde; and polyphenols disclosed in the specification of U.S. Patent No. 3265641.

(Meth)acrylate means methacrylate and/or acrylate, and the same shall apply hereinafter.

Examples of the amino group-containing compound include amines, polyamines, and amino alcohols. Specific examples thereof include ammonia; a monoamine such as an alkylamine having 1 to 20 carbon atoms (such as butylamine) and aniline; aliphatic polyamines such as ethylenediamine, hexamethylenediamine and diethylenetriamine; heterocyclic polyamines such as piperazine and N-aminoethylpiperazine; alicyclic polyamines such as dicyclohexylmethanediamine and isophoronediamine; aromatic polyamines such as phenylenediamine, tolylenediamine and diphenylmethanediamine; alkanolamines such asmonoethanolamine, diethanolamine and triethanolamine; polyamidepolyamines obtained by condensation of dicarboxylic acid with an excess polyamine; polyetherpolyamines; hydrazines (e.g. hydrazine, monoalkylhydrazine), dihydrazides (e.g. dihydrazidesuccinate, dihydrazide terephthalate), and guanidine (e.g. butylguanidine, 1-cyanoguanidine); and dicyandiamide.

Examples of the carboxyl group-containing compound include aliphatic monocarboxylic acids such as acetic acid and propionic acid; aromatic monocarboxylic acids such as benzoic acid; aliphatic polycarboxylic acids such as succinic acid, fumaric acid, sebacic acid and adipic acid; aromatic polycarboxylic acids such as phthalic acid, isophthalic acid, terephthalic acid, trimellitic acid, naphthalene-1,4-dicarboxylic acid, naphthalene-2,3,6-tricarboxylic acid, pyromellitic acid, diphenic acid, 2,3-anthracenedicarboxylic acid, 2,3,6-anthracenetricarboxylic acid and pyrenedicarboxylic acid; polycarboxylic acidpolymers (having a number of functional groups of 2 to 100) such as a (co)polymer of acrylic acid.

Examples of the thiol group-containing compound include a monofunctional phenylthiol, an alkylthiol and a polythiol compound. Examples of the polythiol include di- to octahydric polyhydric thiols. Specific examples thereof include ethylenedithiol, and 1,6-hexanedithiol.

Examples of the phosphoric acid compound include phosphoric acid, phosphorous acid, and phosphonic acid.

It is possible to use, as the active-hydrogen containing compound, a compound having two or more kinds of active hydrogen-containing functional groups (e.g. a hydroxyl group, an amino group, a carboxyl group, a thiol group, a phosphoric acid group) in the molecule.

It is also possible to use, as the active-hydrogen containing compound, alkylene oxide adducts of the above-mentioned active-hydrogen containing compound.

Examples of the alkylene oxide (hereinafter abbreviated to an AO) which is added to the active-hydrogen containing compound include AOs having 2 to 6 carbon atoms, such as ethylene oxide (hereinafter abbreviated to EO), 1,2-propylene oxide (hereinafter abbreviated to PO), 1,3-propylene oxide, 1,2-butylene oxide, and 1,4-butylene oxide. Among these, PO, EO and 1,2-butylene oxide are preferable from the viewpoint of properties and reactivity. In the case where two or more kinds of AOs (for example, PO and EO) are used, an addition method may be block addition or random addition, or these methods may be used in combination.

It is also possible to use, as the active-hydrogen containing compound, an active-hydrogen containing compound (polyester compound) obtained by a condensation reaction of the above-mentioned active-hydrogen containing compound with a polycarboxylic acid (an aliphatic polycarboxylic acid or an aromatic polycarboxylic acid). In the condensation reaction, both an active-hydrogen containing compound and a polycarboxylic acid may be used alone or two or more kinds may be used in combination.

The aliphatic polycarboxylic acid means a compound which satisfies the following (1) and (2).
(1) One molecule has two or more carboxyl groups.
(2) A carboxyl group is not directly bonded to the aromatic ring.

Examples of the aliphatic polycarboxylic acid include succinic acid, adipic acid, sebacic acid, maleic acid, and fumaric acid.

The aromatic polycarboxylic acid means a compound which satisfies the following (1) to (3).
(1) One molecule has one or more aromatic rings.
(2) One molecule has two or more carboxyl groups.
(3) A carboxyl group is directly bonded to the aromatic ring.

Examples of the aromatic polycarboxylic acid include aromatic polycarboxylic acids having 8 to 18 carbon atoms, such as phthalic acid, isophthalic acid, terephthalic acid, 2,2'-bibenzyl dicarboxylic acid, trimellitic acid, hemimellitic acid, trimesic acid, pyromellitic acid and naphthalene-1,4-dicarboxylic acid, naphthalene-2,3,6-tricarboxylic acid, diphenic acid, 2,3-anthracenedicarboxylic acid, 2,3,6-anthracenetricarboxylic acid and pyrenedicarboxylic acid.

In the case where a condensation reaction of a polycarboxylic acid with an active-hydrogen containing compound is performed, an anhydride of a polycarboxylic acid or a lower alkyl ester can also be used.

From the viewpoint of an improvement in handling of a strength-improving agent, and mechanical properties (elongation, tensile strength, and compression hardness) of a polyurethane foam, the active-hydrogen containing compound as R1 is preferably a hydroxyl group-containing compound, an amino group-containing compound, an AO adduct thereof or a polyester compound obtained by a condensation reaction of an active-hydrogen containing compound and a polycarboxylic acid, more preferably, methanol, ethanol, butanol, ethylene glycol, propylene glycol, glycerin, pentaerythritol, sorbitol, sucrose, benzyl alcohol, phenol, methylamine, dimethylamine, ethylamine, diethylamine, butylamine, dibutylamine, phenylamine, diphenylamine, EO and/or PO adducts thereof, or condensates of these active hydrogen compounds and phthalic acid and/or isophthalic acid.

In the general formula (I), Y represents a residue derived from an at least trivalent aromatic polycarboxylic acid (C) by the removal of the carboxyl groups. The aromatic ring as Y is composed of carbon atoms. The substituent of the aromatic ring may be either a hydrogen atom or other substituents, and at least one substituent is a hydrogen atom. That is, the aromatic ring as Y has at least one hydrogen at ombonded to carbon atoms composing the aromatic ring.

Examples of other substituents include an alkyl group, a vinyl group, an allyl group, a cycloalkyl group, a halogen atom, an amino group, a carbonyl group, a carboxyl group, a hydroxyl group, a hydroxyamino group, a nitro group, a phosphino group, a thio group, a thiol group, an aldehyde group, an ether group, an aryl group, an amide group, a cyano group, a urea group, a urethane group, a sulfone group, an ester group, and an azo group. From the viewpoint of an improvement in mechanical properties (elongation, tensile strength, and compression hardness) and costs, other substituents are preferably an alkyl group, a vinyl group, an allyl group, an amino group, an amide group, a urethane group and a urea group.

From the viewpoint of an improvement in mechanical properties, the arrangement of substituents on Y is preferably a structure in which two carbonyl groups are adjacent to each other, and hydrogen is arranged, as a substituent, between the third carbonyl group and the first or second carbonyl group.

Examples of the at least trivalent aromatic polycarboxylic acid (C) composing Y include aromatic polycarboxylic acids having 8 to 18 carbon atoms, such as trimellitic acid, hemimellitic acid, trimesic acid, pyromellitic acid, naphthalene-2,3,6-tricarboxylic acid and 2,3,6-anthracenetricarboxylic acid.

From the viewpoint of an improvement in handling of the strength-improving agent and mechanical properties (tensile strength, tear strength, and compression hardness) of the polyurethane foam, (C) used in Y is preferably a monocyclic compound, and more preferably trimellitic acid and pyromellitic acid.

"a" in the general formula (I) is an integer satisfying a relation: 2 ≤ a ≤ number of substituents on the aromatic ring - 2. The number of substituents on the aromatic ring is the number of substituents bonded to carbon atoms composing the aromatic ring. For example, in the monocyclic aromatic ring composed of 6 carbon atoms, the number of substituents on the aromatic ring is 6, and "a" can be 2 to 4. In the case where the aromatic ring is a monocyclic aromatic ring, from the viewpoint of an improvement in mechanical properties (tensile strength, tear strength, and compression hardness), "a" is preferably 2 or 3.

Z in the general formula (I) represents a residue derived from an at least m-valent active-hydrogen containing compound by the removal of m active hydrogen atoms. The above-mentioned active-hydrogen containing compound represented by R1 is included in the active-hydrogen containing compound as used herein. The active-hydrogen containing compound represented by Z may be the same as some R1s, but it is necessary that at least one R1 is different from Z.

In the general formula (I), m represents an integer of 1 to 10.

From the viewpoint of an improvement in handling of the strength-improving agent and mechanical properties (tensile strength, tear strength, and compression hardness) of the polyurethane foam, a hydroxyl group-containing compound, an amino group-containing compound, an AO adduct thereof and a condensate these and a polycarboxylic acid are preferably used as Z, and m is preferably 1 to 8.

The hydroxyl value (mgKOH/g) of the strength-improving agent (A) for the production of polyurethane foam of the present invention is preferably 0 to 700, more preferably 0 to 650, and even more preferably 0 to 600, from the viewpoint of handling (viscosity) during molding and tensile strength.

In the present invention, the hydroxyl value is measured in accordance with JISK-1557.

The fact that the hydroxyl value of (A) is 0 means that none of R1, Y and Z in the general formula (I) has a hydroxyl group.

The aromatic ring concentration (mmol/g) of the strength-improving agent (A) for the production of polyurethane foam of the present invention is preferably 0.1 to 10.0, more preferably 0.2 to 9.5, and even more preferably 0.3 to 9.0, from the viewpoint of an improvement in mechanical properties (elongation and tensile strength).

The aromatic ring concentration of (A) means the number of moles of aromatic rings in 1 g of the strength-improving agent (A) .

The content of Y derived from the at least trivalent (C) is preferably 0.5 to 50%, still more preferably 4 to 47%, and even more preferably 6 to 45%, based on the number average molecular weight of the strength-improving agent (A) for the production of polyurethane foam from the viewpoint of an improvement in mechanical properties (tensile strength, tear strength, and compression hardness).

The polyol composition (B) for the production of polyurethane foam of the present invention includes the strength-improving agent (A) for the production of polyurethane foam and a polyol (P).

Polyol (P) is selected from polyhydric alcohols, polyether polyols and polyester polyols, which are other than (A).

Examples of the polyhydric alcohol include dihydric alcohols having 2 to 20 carbon atoms, trihydric alcohols having 3 to 20 carbon atoms, and tetra- to octahydric alcohols having 5 to 20 carbon atoms.

Examples of the dihydric alcohol having 2 to 20 carbon atoms include aliphatic diols (e.g. ethylene glycol, propylene glycol, 1,3- and 1,4-butanediol, 1,6-hexanediol, neopentyl glycol) and alicyclic diols (e.g. cyclohexanediol, cyclohexanedimethanol).

Examples of the trihydric alcohol having 3 to 20 carbon atoms include aliphatic triols (e.g. glycerin, trimethylolpropane).

Examples of the tetra- to octahydric polyhydric alcohols having 5 to 20 carbon atoms include aliphatic polyols (pentaerythritol, sorbitol, mannitol, sorbitan, diglycerin, dipentaerythritol and saccharides (sucrose, glucose, mannose, fructose, methyl glucoside and derivatives thereof)).

Examples of the polyether polyol include AO adducts of polyhydric alcohols. Examples of the AO include the above-mentioned AOs. From the viewpoint of properties and reactivity, PO, EO and 1,2-butylene oxide are preferable. In the case where two or more kinds of AOs (for example, PO and EO) are used, the addition method may be either block addition or random addition, or these method may be used in combination.

Examples of the polyester polyol include a condensation reaction product of a polyhydric hydroxyl group-containing compound (the above-mentioned polyhydric alcohol and the polyether polyol) and an ester-forming derivative (phthalic anhydride, dimethyl terephthalate or the like) such as an aromatic polycarboxylic acid (for example, those mentioned above) and an aliphatic polycarboxylic acid (for example, those mentioned above), an anhydride thereof and a lower alkyl (having an alkyl group having 1 to 4 carbon atoms) ester thereof; an addition reaction product of the carboxylic acid anhydride of the polyhydric alcohol and an AO; AO (EO, PO or the like) addition reaction products thereof; a polylactone polyol {for example, those obtained by ring-opening polymerization of a lactone (ε-caprolactone or the like) using the polyhydric alcohol as an initiator}; a polycarbonate polyol (for example, a reaction product of the polyhydric alcohol with alkylene carbonate.

Examples of various polyols other than these polyols include polydiene polyols such as a polymer polyol and a polybutadiene polyol, and hydrogenated compounds thereof; acrylic polyols, hydroxyl group-containing vinyl polymers disclosed in JP-A-58-57413 and JP-A-58-57414; natural oil-based polyols such as castor oil; modified natural oil-based polyols.

The content of the strength-improving agent (A) for the production of polyurethane foam based on the weight of the polyol composition (B) for the production of polyurethane foam is 0.5 to 80% by weight, and particularly preferably 1.0 to 60% by weight, from the viewpoint of an improvement in mechanical properties (elongation and tensile strength). In the present invention, even if the strength-improving agent (A) is contained in the polymer polyol to be used, (A) is regarded as being contained in the polyol composition (B).

In the case of producing a polyol composition (B) for the production of polyurethane foam, a method of mixing a strength-improving agent (A) with a polyol (P) maybe any publicly known method.

In the method for producing a polyurethane foam of the present invention, a strength-improving agent (A) for polyurethane foam or a polyol composition (B) for the production of polyurethane foam and an organic polyisocyanate component (D) are reacted in the presence of a foaming agent and a catalyst to form a polyurethane foam.

It is possible to use, as the organic polyisocyanate component (D), any organic polyisocyanate which is usually used in a polyurethane foam, and examples thereof include an aromatic polyisocyanate, an aliphatic polyisocyanate, an alicyclic polyisocyanate, an araliphatic polyisocyanate, modified compounds thereof (e.g. urethane group-, carbodiimide group-, allophanate group-, urea group-, biuret group-, isocyanurate group- and oxazolidone group-containing modified polyisocyanates) and mixtures of two or more kinds thereof.

Examples of the aromatic polyisocyanate include aromatic diisocyanates having 6 to 16 carbon atoms (excluding carbon atoms in an NCO group; the same shall apply to the following polyisocyanates), aromatic triisocyanates having 6 to 20 carbon atoms, and crude compounds of these isocyanates. Specific examples thereof include 1,3- and 1,4-phenylene diisocyanate, 2, 4- and 2,6-tolylene diisocyanate (TDI), crude TDI, 2,4'- and 4,4'-diphenylmethane diisocyanate (MDI), polymethylene-polyphenylene polyisocyanate (crude MDI), naphthylene-1,5-diisocyanate, and triphenylmethane-4,4',4"-triisocyanate.

Examples of the aliphatic polyisocyanate include aliphatic diisocyanates having 6 to 10 carbon atoms. Specific examples thereof include 1,6-hexamethylene diisocyanate, 2,2,4-trimethylhexamethylene diisocyanate, and lysine diisocyanate.

Examples of the alicyclic polyisocyanate include alicyclic diisocyanates having 6 to 16 carbon atoms. Specific examples thereof include isophorone diisocyanate, 4,4'-dicyclohexylmethane diisocyanate, 1,4-cyclohexane diisocyanate, and norbornane diisocyanate.

Examples of the araliphatic isocyanate include araliphatic diisocyanates having 8 to 12 carbon atoms. Specific examples thereof include xylylene diisocyanate, and α,α,α',α'-tetramethylxylylene diisocyanate.

Specific examples of the modified polyisocyanates include carbodiimide-modified MDI.

Among these, an aromatic polyisocyanate is preferable, TDI, crude TDI, MDI, crude MDI and modified compounds of these isocyanates are more preferable, and TDI, MDI and crude MDI are particularly preferable, from the viewpoint of reactivity and mechanical properties (tensile strength, tear strength, and compression hardness) of the polyurethane foam.

Examples of the foaming agent include water, a liquefied carbonic acid gas and a low boiling point compound having a boiling point of -5 to 70°C.

Examples of the low boiling point compound include a hydrogen atom-containing halogenated hydrocarbon, and a low boiling point hydrocarbon. Specific examples of the hydrogen atom-containing halogenated hydrocarbon and the low boiling point hydrocarbon include methylene chloride, HCFC (hydrochlorofluorocarbon) (e.g. HCFC-123, HCFC-141b, HCFC-142b); HFC (hydrofluorocarbon) (e.g. HFC-152a, HFC-356mff, HFC-236ea, HFC-245ca, HFC-245fa, HFC-365mfc), butane, pentane, and cyclopentane.

Among these, it is preferred to use, as the foaming agent, water, a liquefied carbonic acid gas, methylene chloride, cyclopentane, HCFC-141b, HFC-134a, HFC-356mff, HFC-236ea, HFC-245ca, HFC-245fa, HFC-365mfc and a mixture of two or more kinds of these, from the viewpoint of moldability.

The use amount of water among these foaming agents is preferably 1.0 to 8.0 parts by weight, and more preferably 1.5 to 7.0 parts by weight, based on 100 parts by weight of a polyol component {the strength-improving agent (A) for the production of polyurethane foam and the polyol composition (B) for the production of polyurethane foam} used during the production of a urethane foam from the viewpoint of foam density during formation of a foam and suppression of the generation of scorch. The use amount of the low boiling point compound is preferably 30 parts by weight or less, and more preferably 5 to 25 parts by weight, based on 100 parts by weight of the polyol component from the viewpoint of defective molding. The use amount of the liquefied carbonic acid gas is preferably 30 parts or less, and more preferably 1 to 25 parts.

Hereinabove and hereinafter, "part (s)" means "part (s) by weight".

It is possible to use, as the catalyst, any catalyst which accelerates a urethanization reaction, and examples thereof include tertiary amines {e.g. triethylenediamine, N-ethylmorpholine, diethylethanolamine, tetramethylethylenediamine, diaminobicyclooctane, 1,2-dimethylimidazole, 1-methylimidazole, 1,8-diazabicyclo-[5,4,0]-undecene-7, bis(N,N-dimethylamino-2-ethyl)ether, N,N,N',N'-tetramethylhexamethylenediamine}, and/or carboxylic acid metal salts (e.g. potassium acetate, potassium octylate, stannous octylate, dibutylstannic dilaurate, lead octylate) . The use amount of the catalyst is preferably 0.01 to 5.0 parts by weight, and more preferably 0.1 to 2.0 parts by weight, based on 100 parts by weight of the polyol component which is usually used in the production of a urethane foam from the viewpoint of an improvement in mechanical properties (tensile strength, tear strength, and compression hardness).

It is possible to use, as the foam stabilizer, any foam stabilizer which is used in the production of a common polyurethane foam, and examples thereof include dimethylsiloxane-based foam stabilizers [e.g. "SRX-253" and "PRX-607" manufactured by Dow Corning Toray Co., Ltd.] and polyether-modified dimethylsiloxane-based foam stabilizers [e.g. "L-540", "SZ-1142", "L-3601", "SRX-294A", "SH-193", "SZ-1720", "SZ-1675t" and "SF-2936F" manufactured by Dow Corning Toray Co., Ltd., "B-4900" manufactured by Degussa Japan Co., Ltd.]. The use amount of the foam stabilizer is preferably 0.5 to 5.0 parts by weight, and more preferably 1.0 to 3.0 parts by weight, based on 100 parts by weight of the polyol component from the viewpoint of mechanical properties (elongation and tensile strength), a change over time in mechanical properties, and discoloration of the foam.

In the method for producing a polyurethane foam of the present invention, a reaction may be optionally performed using the following other auxiliary agents in the presence of the auxiliary agents.

Examples of the other auxiliary agents include publicly known auxiliary components such as colorants (dyes and pigments), plasticizers (e.g. phthalic acid ester, adipic acid ester), organic fillers (e.g. a synthetic short fiber, a hollow microsphere made of a thermoplastic or thermosetting resin), flame retardants (e.g. phosphoric acid ester, halogenated phosphoric acid ester), antiaging agents (e.g. triazole, benzophenone), and antioxidants (e.g. hindered phenol, hindered amine).

Regarding the addition amount of these auxiliary agents, the amount of the colorant is preferably 1 part by weight or less, the amount of the plasticizer is preferably 10 parts by weight or less, and more preferably 5 parts by weight or less, based on 100 parts by weight of the polyol component. The amount of the organic filler is preferably 50 parts by weight or less, and more preferably 30 parts by weight or less. The amount of the flame retardant is preferably 30 parts by weight or less, and more preferably 2 to 20 parts by weight. The amount of the antiaging agent is preferably 1 part by weight or less, and more preferably 0.01 to 0.5 parts by weight. The amount of the antioxidant is preferably 1 part by weight or less, and more preferably 0.01 to 0.5 parts by weight. The total use amount of auxiliary agents is preferably 50 parts by weight or less, and more preferably 0.2 to 30 parts by weight.

In the production method of the present invention, an isocyanate index [equivalent ratio (NCO group/active hydrogen atom-containing group) × 100] in the production of a polyurethane foam is preferably 70 to 150, more preferably 80 to 130, and particularly preferably 90 to 120, from the viewpoint of moldability and mechanical properties (tensile strength, tear strength, and compression hardness).

An example of specific examples of the method for producing a polyurethane foam of the present invention is as shown below. First, a polyol component for the production of polyurethane foam, a foaming agent, a catalyst, a foam stabilizer and, optionally, other additives are mixed in a predetermined amount. Then, using a polyurethane foam foaming machine or stirrer, this mixture and an organic polyisocyanate component are quickly mixed together. The obtained mixed solution (raw foaming solution) is allowed to undergo continuous foaming, and thus a polyurethane foam can be obtained. It is also possible to obtain a polyurethane foam by injecting the mixed solution into a closed or open mold (made of metal or resin) and performing a urethanization reaction, followed by curing for a predetermined time and further removal from the mold.

The polyurethane foam obtained by the method of the present invention is suitably used for cushions for vehicles, furniture and building materials, clothing, electric devices, electronic devices or packaging.

### EXAMPLES

The present invention will be described in more detail below by way of Examples, but the present invention is not limited thereto.

### Example 1

In an autoclave made of stainless steel, equipped with a stirrer and a temperature controller, 1 mol of polypropylene glycol (SANNIX PP-2000 manufactured by Sanyo Chemical Industries, Ltd.; polypropylene glycol having a number average molecular weight of 2000 and a hydroxyl value of 56.0), 1 mol of trimellitic anhydride and 0.010 mol of an alkali catalyst (N-ethylmorpholine) were charged and then reacted under a nitrogen atmosphere at 0.20 MPa and 120 ± 10°C for 1 hour, followed by half esterification. After the half esterification, 82 mol of PO was added dropwise over 5 hours while controlling to 80 ± 10°C and a pressure of 0.50 MPa or less, followed by aging at 80 ± 10°C for 1 hour. After 2 mol of EO was added dropwise over 1 hour, aging was performed for 1 hour. After completion of the aging, the alkali catalyst was removed under reduced pressure at 0.1 MPa for 1 hour to obtain a strength-improving agent A-1. The measured values of A-1 are shown in Table 1.

### Example 2

In the same autoclave as in Example 1, 1 mol of a glycerin PO adduct (SANNIX GP-3000NS manufactured by Sanyo Chemical Industries, Ltd.; having a number average molecular weight of 3000 and a hydroxyl value of 56.0), 6 mol of phthalic anhydride and 0.030 mol of an alkali catalyst (N-ethylmorpholine) were charged and then reacted under a nitrogen atmosphere at 0.20 MPa and 120 ± 10°C for 1 hour, followed by half esterification. After the half esterification, 6 mol of EO was added dropwise over 5 hours while controlling to 80 ± 10°C and a pressure of 0.50 MPa or less, followed by aging at 80 ± 10°C for 1 hour. After cooling to room temperature, 1 mol of trimellitic anhydride was changed and half esterification was performed at 0.20 MPa and 120 ± 10°C for 1 hour. While controlling to 80 ± 10°C and a pressure of 0.5 MPa or less, 2 mol of EO was added dropwise over 2 hours, followed by aging at 80 ± 10°C for 1 hour. After completion of the aging, the alkali catalyst was removed under reduced pressure at 0.1 MPa for 1 hour to obtain a strength-improving agent A-2. The measured values of A-2 are shown in Table 1.

### Example 3

In the same manner as in Example 2, except that a glycerin PO adduct (SANNIX GP-1500 manufactured by Sanyo Chemical Industries, Ltd.; having a number average molecular weight of 1500 and a hydroxyl value of 112.0) was used in place of the glycerin PO adduct (GP-3000NS), and the use amount of N-ethylmorpholine was changed to 0.010 mol in Example 2, a strength-improving agent A-3 was obtained. The measured values of A-3 are shown in Table 1.

### Example 4

In the same manner as in Example 1, except that 1 mol of a glycerin PO adduct (GP-3000NS) was used in place of polypropylene glycol (PP-2000), PO was not used, and the amount of EO was changed from 2 mol to 6 mol in Example 1, a strength-improving agent A-4 was obtained. The measured values of A-4 are shown in Table 1.

### Example 5

In the same autoclave as in Example 1, 1 mol of polypropylene glycol (PP-2000), 2 mol of phthalic anhydride and 0.010 mol of an alkali catalyst (N-ethylmorpholine) were charged and then reacted under a nitrogen atmosphere at 0.20 MPa and 120 ± 10°C for 1 hour, followed by half esterification. After the half esterification, 2 mol of EO was added dropwise over 5 hours while controlling to 80 ± 10°C and a pressure of 0.50 MPa or less, followed by aging at 120 ± 10°C for 1 hour. After cooling to room temperature, 2 mol of trimellitic anhydride was charged and esterification was performed at 0.20 MPa and 120 ± 10°C for 1 hour. While controlling to 80 ± 10°C and a pressure of 0.5 MPa or less, 4 mol of EO was added dropwise over 2 hours, followed by aging at 80 ± 10°C for 1 hour. After completion of the aging, the alkali catalyst was removed under reduced pressure at 0.1 MPa for 1 hour to obtain a strength-improving agent A-5. The measured values of A-5 are shown in Table 1.

### Example 6

In the same manner as in Example 2, except that 1 mol of a glycerin PO adduct (GP-1500) was used in place of the glycerin PO adduct (GP-3000NS), the use amount of N-ethylmorpholine was changed to 0.010 mol, and 6 mol of PO was used in place of 6 mol of EO in Example 2, a strength-improving agent A-6 was obtained. The measured values of A-6 are shown in Table 1.

### Example 7

In the same manner as in Example 2, except that the use amount of phthalic anhydride was changed to 3 mol, the amount of EO was changed from 6 mol to 3 mol, and the amount of EO was changed from 2 mol to 6 mol in Example 2, a strength-improving agent A-7 was obtained. The measured values of A-7 are shown in Table 1.

### Example 8

In the same manner as in Example 2, except that the glycerin PO adduct (GP-3000NS) was changed to 1 mol of a glycerin PO adduct (SANNIX GP-4000 manufactured by Sanyo Chemical Industries, Ltd. ; having a number average molecular weight of 4000 and a hydroxyl value of 42.0) and the use amount of N-ethylmorpholine was changed to 0.010 mol in Example 2, a strength-improving agent A-8 was obtained. The measured values of A-8 are shown in Table 1.

### <Examples 9 to 132 Production of Strength-Improving Agents>

The production of strength-improving agents A-9 to A-128 will be described below. The measured values of the obtained strength-improving agents are shown in Table 1 to Table 3.

Among active-hydrogen containing compounds used in the production of A-9 to A-128, those which are not shown in Examples 1 to 8 are shown below. Those which are not shown can be easily available as reagents.

### (1) Modified Ethanol

- Polyol (I) (an ethanol EO adduct; having a number average molecular weight of 200 and a hydroxyl value of 280)
   In the same autoclave as in Example 1, 1 mol of ethanol and 9.0 mmol of KOH were charged and then dehydrated at 130 ± 5°C and 10 kPa for 1 hour. After completion of the dehydration, 3.5 mol of EO was added dropwise over 2 hours while controlling to 130°C ± 5°C and 0.5 MPa or less, and aging was performed for 2 hours after completion of the dropwise addition. After completion of the aging and cooling to 90 ± 5°C, 2% by weight of water and 2% by weight of KYOWAAD 600 (manufactured by Kyowa Chemical Industry Co., Ltd.; synthetic silicate) were added, followed by a treatment for 1 hour. The reaction product was removed from the autoclave, filtered using a 1 micron filter paper and then dehydrated under reduced pressure to obtain a polyol (I).
- Polyol (II) (an ethanol EO adduct; having a number average molecular weight of 2000 and a hydroxyl value of 56.1)
   In the same manner except that 90 mmol of KOH and 44.4 mol of EO were used in the production of the polyol (I), a polyol was produced.
- Polyol (III) (a copolymer of ethanol, phthalic anhydride and EO; having a number average molecular weight of 300 and a hydroxyl value of 187)
   In the same autoclave as in Example 1, 1 mol of ethanol, 1 mol of phthalic anhydride and 0.01 mol of N-ethylmorpholine were charged and then reacted under a nitrogen atmosphere at 120 ± 10°C for 1 hour, followed by half esterification. After the half esterification, 2.4 mol of EO was added dropwise over 2 hours while controlling to 80 ± 10°C and a pressure of 0.50 MPa or less, and then aging was performed for 3 hours. After completion of the aging, N-ethylmorpholine was removed under reduced pressure at 100 ± 10°C and 10 kPa for 1 hour to obtain a polyol (III).
- Polyol (IV) (a copolymer of ethanol, phthalic anhydride and EO; having a number average molecular weight of 1000 and a hydroxyl value of 56.1)
   In the same manner except that 4 mol of phthalic anhydride and 8.2 mol of EO were used in the production of the polyol (III), a polyol (IV) was produced.

### (2) Modified Propylene Glycol

- PEG-200 (a propylene glycol EO adduct; having a number average molecular weight of 200 and a hydroxyl value of 560, "PEG-200" manufactured by Sanyo Chemical Industries, Ltd.)
- PEG-2000 (a propylene glycol EO adduct; having a number average molecular weight of 2000 and a hydroxyl value of 56.1, "PEG-2000" manufactured by Sanyo Chemical Industries, Ltd.)
- PP-200 (a propylene glycol PO adduct; having a number average molecular weight of 200 and a hydroxyl value of 560, "SANNIX PP-200" manufactured by Sanyo Chemical Industries, Ltd.)

### (3) Modified Glycerin

- GP-400 (a glycerin PO adduct; having a number average molecular weight of 400 and a hydroxyl value of 420, "SANNIX GP-400" manufactured by Sanyo Chemical Industries, Ltd.)
- Polyol (VIII) (aglycerin, phthalic anhydride, PO, EOcopolymer; having a number average molecular weight of 3000 and a hydroxyl value of 56.1)
   In the same manner except that a glycerin PO adduct (GP-1500) was used in place of ethanol, and 0.10 mol of N-ethylmorpholine and 13.9 mol of EO were used in the production of the polyol (III), a polyol (VIII) was produced.
- Polyol (X) (a glycerin PO/EO block adduct; having a number average molecular weight of 5500 and a hydroxyl value of 30.6)
   In the same autoclave as in Example 1, 1 mol of glycerin and 0.25 mol of KOH were charged and then dehydrated at 130 ± 5°C and 10 kPa for 1 hour. After completion of the dehydration and cooling to 110 ± 5°C, 79 mol of PO was added dropwise over 4 hours while controlling to 0.5 MPa or less, and then aging was performed for 2 hours after completion of the dropwise addition. After the aging, 19 mol of EO was added dropwise over 2 hours while controlling to 130°C ± 5°C and 0.5 MPa or less, and then aging was performed for 2 hours after completion of the dropwise addition. After completion of the aging and cooling to 90 ± 5°C, 2% by weight of water and 2% by weight of KYOWAAD 600 (manufactured by Kyowa Chemical Industry Co., Ltd.; synthetic silicate) were added, followed by a treatment for 1 hour. The reaction product was removed from the autoclave, filtered using a 1 micron filter paper and then dehydrated under reduced pressure to obtain a polyol (X).

### (4) Modified Pentaerythritol

- polyol (V) (a pentaerythritol EO adduct; having a number average molecular weight of 400 and a hydroxyl value of 561)
   In the same manner except that ethanol was changed to pentaerythritol, and 18 mmol of KOH and 6.0 mol of EO were used in the production of the polyol (I), a polyol (V) was produced.

### (5) Modified Sorbitol

- SP-750 (a sorbitol PO adduct; having a number average molecular weight of 690 and a hydroxyl value of 490, "SANNIX SP-750" manufactured by Sanyo Chemical Industries, Ltd.)

### (6) Modified Sucrose

- RP-410A (a sucrose PO adduct; having a number average molecular weight of 1070 and a hydroxyl value of 420, "SANNIX RP-410A" manufactured by Sanyo Chemical Industries, Ltd.)
- Polyol (VI) (a sucrose, phthalic anhydride, EO copolymer; having a number average molecular weight of 1900 and a hydroxyl value of 236)
   In the same autoclave as in Example 1, 1 mol of sucrose, 8 mol of phthalic anhydride, 0.03 mol of N-ethylmorpholine and 6.5 mol of THF were charged and then reacted under a nitrogen atmosphere at 120 ± 10°C for 1 hour, followed by half esterification. After the half esterification, 8.5 mol of EO was added dropwise over 2 hours while controlling to 80 ± 10°C and a pressure of 0.50 MPa or less, followed by aging for 3 hours. After completion of the aging, N-ethylmorpholine and THF were removed under reduced pressure at 100 ± 10°C and 10 kPa for 1 hour to obtain a polyol (VI).
- Polyol (VII) (a sucrose, phthalic anhydride, PO, EO copolymer; having a number average molecular weight of 4150 and a hydroxyl value of 108)
   In the same manner except that RP-410A was used in place of ethanol, the use amount of N-ethylmorpholine was changed to 0.05 mol, THF was not used, and 16.2 mol of EO was used in the production of the polyol (III), a polyol (VII) was obtained.
- Polyol (IX) (a sucrose PO adduct; having a number average molecular weight of 3000 and a hydroxyl value of 150)
   In the same autoclave as in Example 1, 1 mol of RP-410A and 0.14 mol of KOH were charged and then dehydrated at 110 ± 5°C and 10 kPa for 1 hour. After completion of the dehydration, 33.3 mol of PO was added dropwise over 4 hours while controlling to 0.5 MPa or less, and aging was performed for 3 hours after completion of the dropwise addition. After completion of the aging and cooling to 90 ± 5°C, 2% by weight of water and 2% by weight of KYOWAAD 600 (manufactured by Kyowa Chemical Industry Co., Ltd.; synthetic silicate) were added, followed by a treatment for 1 hour. The reaction product was removed from the autoclave, filtered using a 1 micron filter paper and then dehydrated under reduced pressure to obtain a polyol (IX).

**[Table 1]**

| Example | Strength-improving agent | Hydroxyl value (mgKOH/mg) 0 to 700 | Y content (% by weight) 0.5 to 50 | Aromatic ring concentration (mmol/g) 0.1 to 10.0 | a | m |
|---|---|---|---|---|---|---|
| 1 | A-1 | 23.9 | 1.7 | 0.14 | 2 | 1 |
| 2 | A-2 | 50.5 | 2.7 | 1.58 | 2 | 1 |
| 3 | A-3 | 76.4 | 4.1 | 2.39 | 2 | 1 |
| 4 | A-4 | 87.5 | 9.4 | 0.78 | 2 | 3 |
| 5 | A-5 | 76.1 | 8.2 | 1.36 | 2 | 2 |
| 6 | A-6 | 87.3 | 7.5 | 2.49 | 2 | 2 |
| 7 | A-7 | 76.1 | 8.2 | 1.36 | 2 | 3 |
| 8 | A-8 | 41.2 | 2.2 | 1.29 | 2 | 1 |
| 9 | A-9 | 125.2 | 26.8 | 2.23 | 2 | 1 |
| 10 | A-10 | 98.1 | 21.0 | 5.24 | 2 | 1 |
| 11 | A-11 | 103.1 | 22.1 | 5.51 | 2 | 1 |
| 12 | A-12 | 350.6 | 25.0 | 2.08 | 2 | 1 |
| 13 | A-13 | 247.5 | 17.6 | 1.47 | 2 | 1 |
| 14 | A-14 | 108.4 | 7.7 | 0.64 | 2 | 1 |
| 15 | A-15 | 224.3 | 16.0 | 1.33 | 2 | 1 |
| 16 | A-16 | 98.4 | 21.1 | 5.26 | 2 | 1 |
| 17 | A-17 | 80.8 | 17.3 | 7.20 | 2 | 1 |
| 18 | A-18 | 26.5 | 1.9 | 2.05 | 2 | 1 |
| 19 | A-19 | 92.9 | 19.9 | 4.97 | 2 | 1 |
| 20 | A-20 | 221.3 | 23.7 | 3.94 | 2 | 1 |
| 21 | A-21 | 98.2 | 21.0 | 5.25 | 2 | 1 |
| 22 | A-22 | 32.4 | 3.5 | 2.31 | 2 | 1 |
| 23 | A-23 | 220.9 | 23.6 | 3.94 | 2 | 1 |
| 24 | A-24 | 47.4 | 3.4 | 1.97 | 2 | 1 |
| 25 | A-25 | 32.4 | 3.5 | 2.31 | 2 | 1 |
| 26 | A-26 | 169.7 | 18.2 | 3.03 | 2 | 1 |
| 27 | A-27 | 33.0 | 3.5 | 2.06 | 2 | 1 |
| 28 | A-28 | 187.6 | 20.1 | 1.67 | 2 | 1 |
| 29 | A-29 | 326.2 | 34.9 | 2.91 | 2 | 1 |
| 30 | A-30 | 289.9 | 31.0 | 2.58 | 2 | 1 |
| 31 | A-31 | 249.9 | 26.7 | 2.23 | 2 | 1 |
| 32 | A-32 | 51.3 | 3.7 | 2.13 | 2 | 1 |
| 33 | A-33 | 0.0 | 26.8 | 2.23 | 2 | 1 |
| 34 | A-34 | 0.0 | 5.3 | 0.44 | 2 | 1 |
| 35 | A-35 | 0.0 | 21.9 | 3.65 | 2 | 1 |
| 36 | A-36 | 0.0 | 9.6 | 4.01 | 2 | 1 |
| 37 | A-37 | 317.8 | 10.5 | 1.42 | 3 | 1 |
| 38 | A-38 | 406.5 | 17.9 | 2.42 | 3 | 1 |
| 39 | A-39 | 368.3 | 16.2 | 2.19 | 3 | 1 |
| 40 | A-40 | 324.3 | 14.3 | 1.93 | 3 | 1 |
| 41 | A-41 | 35.6 | 1.2 | 2.06 | 3 | 1 |
| 42 | A-42 | 87.0 | 2.9 | 0.39 | 3 | 1 |
| 43 | A-43 | 0.0 | 14.7 | 1.99 | 3 | 1 |
| 44 | A-44 | 0.0 | 3.2 | 0.43 | 3 | 1 |

**[Table 2]**

| Example | Strength-improving agent | Hydroxyl value (mgKOH/mg) 0 to 700 | Content of Y (% by weight) 0.5 to 50 | Aromatic ring concentration (mmol/g) 0.1 to 10.0 | a | m |
|---|---|---|---|---|---|---|
| 45 | A-45 | 229.8 | 7.6 | 1.02 | 3 | 1 |
| 46 | A-46 | 70.5 | 9.3 | 3.77 | 3 | 1 |
| 47 | A-47 | 61.0 | 8.0 | 5.43 | 3 | 1 |
| 48 | A-48 | 34.1 | 1.1 | 1.98 | 3 | 1 |
| 49 | A-49 | 332.9 | 11.0 | 1.48 | 3 | 1 |
| 50 | A-50 | 70.3 | 9.3 | 3.76 | 3 | 1 |
| 51 | A-51 | 72.9 | 9.6 | 3.90 | 3 | 1 |
| 52 | A-52 | 317.5 | 23.6 | 3.77 | 2 | 1 |
| 53 | A-53 | 72.2 | 5.4 | 0.86 | 2 | 1 |
| 54 | A-54 | 0.0 | 25.1 | 4.02 | 2 | 1 |
| 55 | A-55 | 0.0 | 5.4 | 0.87 | 2 | 1 |
| 56 | A-56 | 290.2 | 30.2 | 5.17 | 2 | 1 |
| 57 | A-57 | 70.7 | 7.4 | 1.26 | 2 | 1 |
| 58 | A-58 | 0.0 | 31.9 | 5.47 | 2 | 1 |
| 59 | A-59 | 0.0 | 7.5 | 1.28 | 2 | 1 |
| 60 | A-60 | 336.9 | 36.0 | 3.00 | 2 | 2 |
| 61 | A-61 | 0.0 | 28.2 | 7.06 | 2 | 2 |
| 62 | A-62 | 417.6 | 18.4 | 2.48 | 3 | 2 |
| 63 | A-63 | 0.0 | 13.7 | 7.39 | 3 | 2 |
| 64 | A-64 | 295.3 | 31.6 | 2.63 | 2 | 2 |
| 65 | A-65 | 0.0 | 25.4 | 6.36 | 2 | 2 |
| 66 | A-66 | 374.0 | 16.4 | 2.22 | 3 | 2 |
| 67 | A-67 | 0.0 | 12.6 | 6.80 | 3 | 2 |
| 68 | A-68 | 338.0 | 23.4 | 2.41 | 2/3 | 2 |
| 69 | A-69 | 271.5 | 29.0 | 2.42 | 2 | 3 |
| 70 | A-70 | 0.0 | 23.7 | 5.94 | 2 | 3 |
| 71 | A-71 | 0.0 | 8.7 | 2.19 | 2 | 3 |
| 72 | A-72 | 348.2 | 15.3 | 2.07 | 3 | 3 |
| 73 | A-73 | 0.0 | 11.9 | 6.44 | 3 | 3 |
| 74 | A-74 | 295.3 | 31.6 | 2.63 | 2 | 4 |
| 75 | A-75 | 0.0 | 25.4 | 6.36 | 2 | 4 |
| 76 | A-76 | 374.0 | 16.4 | 2.22 | 3 | 4 |
| 77 | A-77 | 0.0 | 12.6 | 6.80 | 3 | 4 |
| 78 | A-78 | 284.4 | 30.4 | 2.53 | 2 | 6 |
| 79 | A-79 | 0.0 | 24.7 | 6.17 | 2 | 6 |
| 80 | A-80 | 362.3 | 15.9 | 2.15 | 3 | 6 |
| 81 | A-81 | 0.0 | 12.3 | 6.64 | 3 | 6 |
| 82 | A-82 | 0.0 | 31.4 | 2.62 | 2 | 8 |
| 83 | A-83 | 0.0 | 19.3 | 1.61 | 2 | 8 |
| 84 | A-84 | 0.0 | 23.7 | 5.93 | 2 | 8 |
| 85 | A-85 | 0.0 | 25.1 | 6.28 | 2 | 8 |
| 86 | A-86 | 271.3 | 29.0 | 2.42 | 2 | 8 |
| 87 | A-87 | 171.3 | 18.3 | 1.53 | 2 | 8 |
| 88 | A-88 | 163.7 | 17.5 | 1.46 | 2 | 8 |

**[Table 3]**

| Example | Strength -improving agent | Hydroxyl value (mgKOH/mg) 0 to 700 | Content of Y (% by weight) 0.5 to 50 | Aromatic ring concentration (mmol/g) 0.1 to 10.0 | a | m |
|---|---|---|---|---|---|---|
| 89 | A-89 | 164.0 | 17.5 | 1.46 | 2 | 8 |
| 90 | A-90 | 0.0 | 23.8 | 5.96 | 2 | 8 |
| 91 | A-91 | 0.0 | 19.1 | 7.97 | 2 | 8 |
| 92 | A-92 | 35.7 | 1.9 | 2.07 | 2 | 8 |
| 93 | A-93 | 0.0 | 22.3 | 5.58 | 2 | 8 |
| 94 | A-94 | 127.3 | 27.2 | 4.54 | 2 | 8 |
| 95 | A-95 | 0.0 | 23.8 | 5.95 | 2 | 8 |
| 96 | A-96 | 33.0 | 3.5 | 2.35 | 2 | 8 |
| 97 | A-97 | 127.0 | 27.2 | 4.53 | 2 | 8 |
| 98 | A-98 | 48.3 | 3.4 | 2.01 | 2 | 8 |
| 99 | A-99 | 33.0 | 3.5 | 2.36 | 2 | 8 |
| 100 | A-100 | 94.4 | 20.2 | 3.36 | 2 | 8 |
| 101 | A-101 | 50.5 | 3.6 | 2.10 | 2 | 8 |
| 102 | A-102 | 211.1 | 22.6 | 1.88 | 2 | 8 |
| 103 | A-103 | 347.6 | 37.2 | 3.10 | 2 | 8 |
| 104 | A-104 | 377.5 | 40.4 | 3.36 | 2 | 8 |
| 105 | A-105 | 216.8 | 23.2 | 3.86 | 2 | 8 |
| 106 | A-106 | 140.5 | 15.0 | 3.76 | 2 | 8 |
| 107 | A-107 | 0.0 | 24.7 | 4.12 | 2 | 8 |
| 108 | A-108 | 0.0 | 15.7 | 3.91 | 2 | 8 |
| 109 | A-109 | 348.0 | 15.3 | 2.07 | 3 | 8 |
| 110 | A-110 | 428.5 | 18.8 | 2.55 | 3 | 8 |
| 111 | A-111 | 428.5 | 18.8 | 2.55 | 3 | 8 |
| 112 | A-112 | 286.5 | 12.6 | 3.40 | 3 | 8 |
| 113 | A-113 | 188.8 | 8.3 | 1.12 | 3 | 8 |
| 114 | A-114 | 189.3 | 8.3 | 1.12 | 3 | 8 |
| 115 | A-115 | 0.0 | 12.0 | 6.47 | 3 | 8 |
| 116 | A-116 | 0.0 | 9.2 | 8.70 | 3 | 8 |
| 117 | A-117 | 36.2 | 0.8 | 2.04 | 3 | 8 |
| 118 | A-118 | 0.0 | 17.0 | 2.30 | 3 | 8 |
| 119 | A-119 | 0.0 | 11.9 | 6.44 | 3 | 8 |
| 120 | A-120 | 0.0 | 12.8 | 6.90 | 3 | 8 |
| 121 | A-121 | 242.0 | 27.0 | 4.31 | 2 | 8 |
| 122 | A-122 | 159.1 | 17.7 | 2.84 | 2 | 8 |
| 123 | A-123 | 0.0 | 29.0 | 4.63 | 2 | 8 |
| 124 | A-124 | 0.0 | 18.6 | 2.97 | 2 | 8 |
| 125 | A-125 | 218.5 | 34.1 | 5.84 | 2 | 8 |
| 126 | A-126 | 148.6 | 23.2 | 3.97 | 2 | 8 |
| 127 | A-127 | 0.0 | 36.3 | 6.23 | 2 | 8 |
| 128 | A-128 | 0.0 | 24.2 | 4.15 | 2 | 8 |
| 129 | A-129 | 336.9 | 36.0 | 3.00 | 2 | 2 |
| 130 | A-130 | 336.9 | 22.2 | 3.00 | 2 | 2 |
| 131 | A-131 | 0.0 | 28.2 | 7.06 | 2 | 2 |
| 132 | A-132 | 0.0 | 17.4 | 7.06 | 2 | 2 |

The strength-improving agents A-9 to 11, 33 to 36, 49 to 51, 54, 55, 58, 59, 61, 65, 70, 71, 75, 79, 82 to 85, 107, 108, 123, 124, 127 and 128 were produced by the following production method using raw materials in the amounts (mol) shown in Table 4. Description will be made using A-9 as an example.

In the same autoclave as in Example 1, 1 mol of PEG-200 (a Z constituent material), 1 mol of trimellitic anhydride (a Y constituent material), 2.2 mol of triethylamine as a catalyst and 2 mol of THF as a solvent were charged, and then half esterification was performed under a nitrogen atmosphere at 80 ± 10°C for 2 hours. Thereafter, 2 mol of ethylene bromide was added as an R1 constituent material, followed by a reaction at 80 ± 10°C for 6 hours. After the reaction, a precipitated salt was removed by filtration and the organic layer was washed with water, and then the objective product was separated by extraction with toluene. The organic layer was dried over anhydrous magnesium sulfate and then the solvent was distilled off at 80 ± 10°C and 10 kPa to obtain a strength-improving agent A-9. The measured values of the respective strength-improving agents are shown in Table 1 to Table 3.

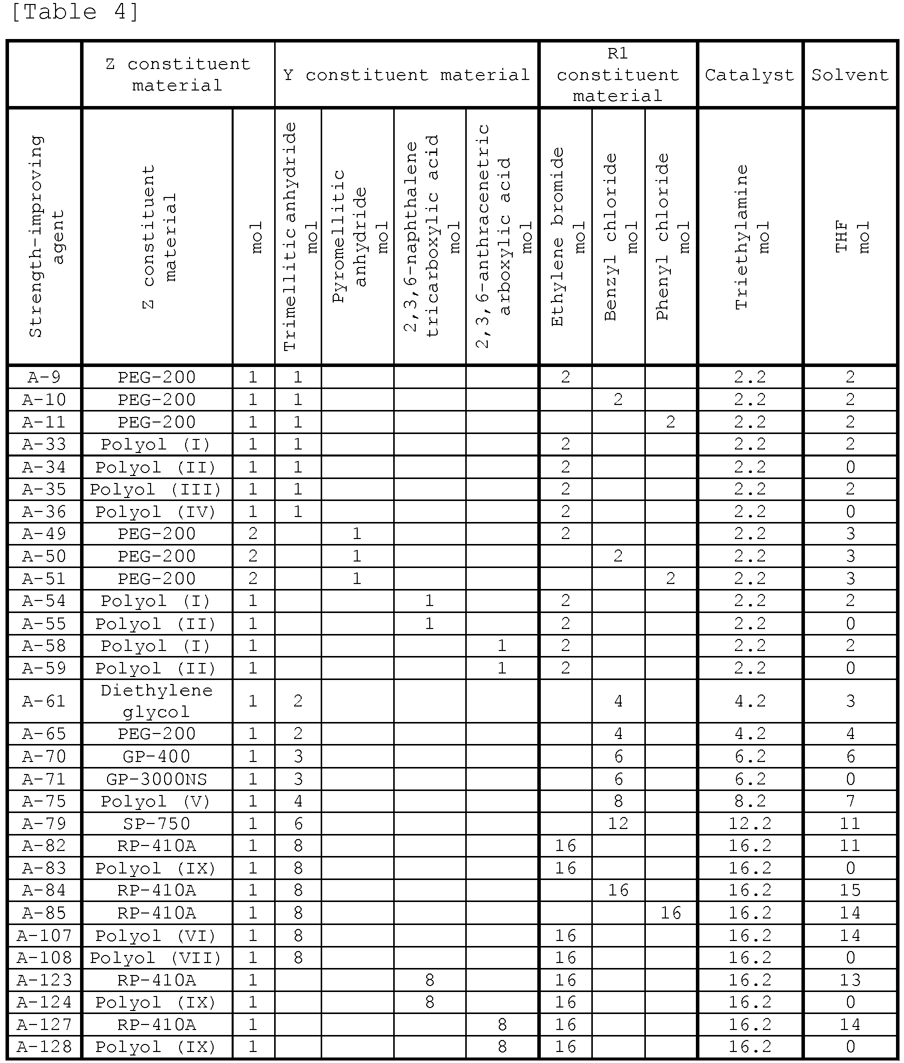

The strength-improving agents A-43, 44, 63, 67, 73, 77, 81, 118, 119 and 120 were produced by the following production method using raw materials in the amounts (mol) shown in Table 5. Description will be made using A-43 as an example.

In the same autoclave as in Example 1, 1 mol of the polyol (I) (a Z constituent material), 1 mol of pyromellitic anhydride (a Y constituent material), 3.2 mol of triethylamine as a catalyst and 2 mol of THF as a solvent were charged and then half esterification was performed under a nitrogen atmosphere at 80 ± 10°C for 2 hours. Thereafter, 1 mol of water was added and a reaction was performed for 30 minutes, followed by the addition of 3 ml of ethylene bromide as an R1 constituent material and further reaction at 80 ± 10°C for 6 hours. After the reaction, a precipitated salt was removed by filtration and the organic layer was washed with water, and then the objective product was separated by extraction with toluene. The organic layer was dried over anhydrous magnesium sulfate, and then the solvent was distilled off at 80 ± 10°C and 10 kPa to obtain a strength-improving agent A-43. The measured values of the respective strength-improving agents are shown in Table 1 to Table 3.

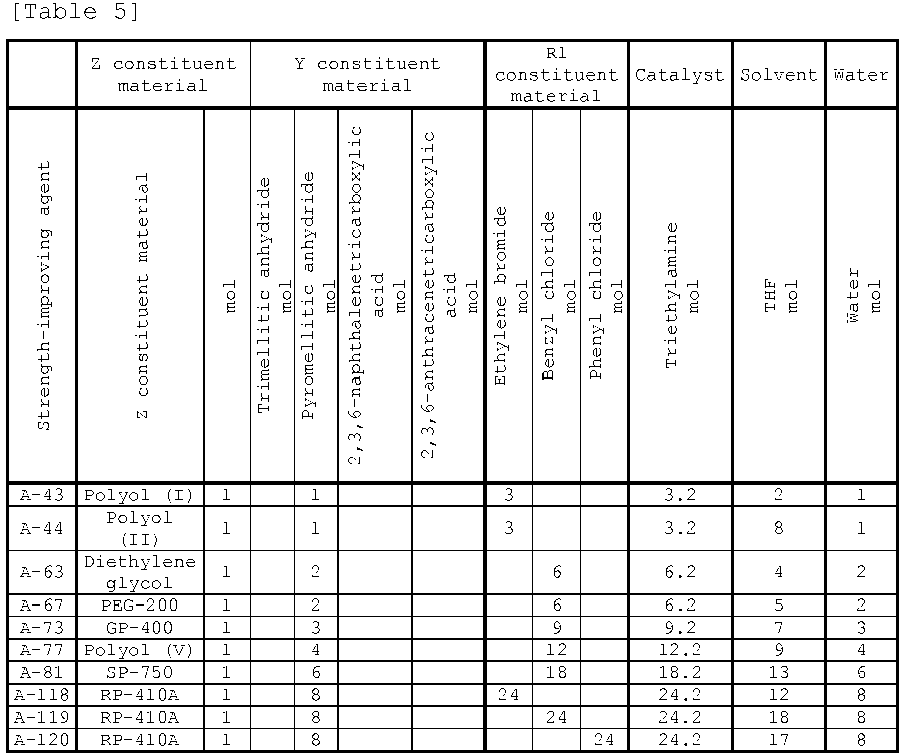

The strength-improving agents A-12, 13, 29 to 32, 37, 41, 52, 53, 56, 57, 60, 62, 64, 66, 68, 69, 74, 78, 86, 87, 103 to 106, 121, 122, 125 and 126 were produced by the following production method using raw materials in the amounts (mol) shown in Table 6. Description will be made using A-12 as an example.

In the same autoclave as in Example 1, 1 mol of PEG-200 (a Z constituent material), 1 mol of trimellitic anhydride (a Y constituent material), 0.02 mol of N-ethylmorpholine as a catalyst and 2 mol of THF as a solvent were charged, and then half esterification was performed under a nitrogen atmosphere at 80 ± 10°C for 2 hours. Thereafter, 2 mol of EO was added dropwise over 2 hours as an R1 constituent material while controlling to 80 ± 10°C and 0.5 MPa or less, followed by aging for 3 hours. After aging, the catalyst and the solvent were distilled off at 80 ± 10°C and 10 kPa to obtain a strength-improving agent A-12. The measured values of the respective strength-improving agents are shown in Table 1 to Table 3.

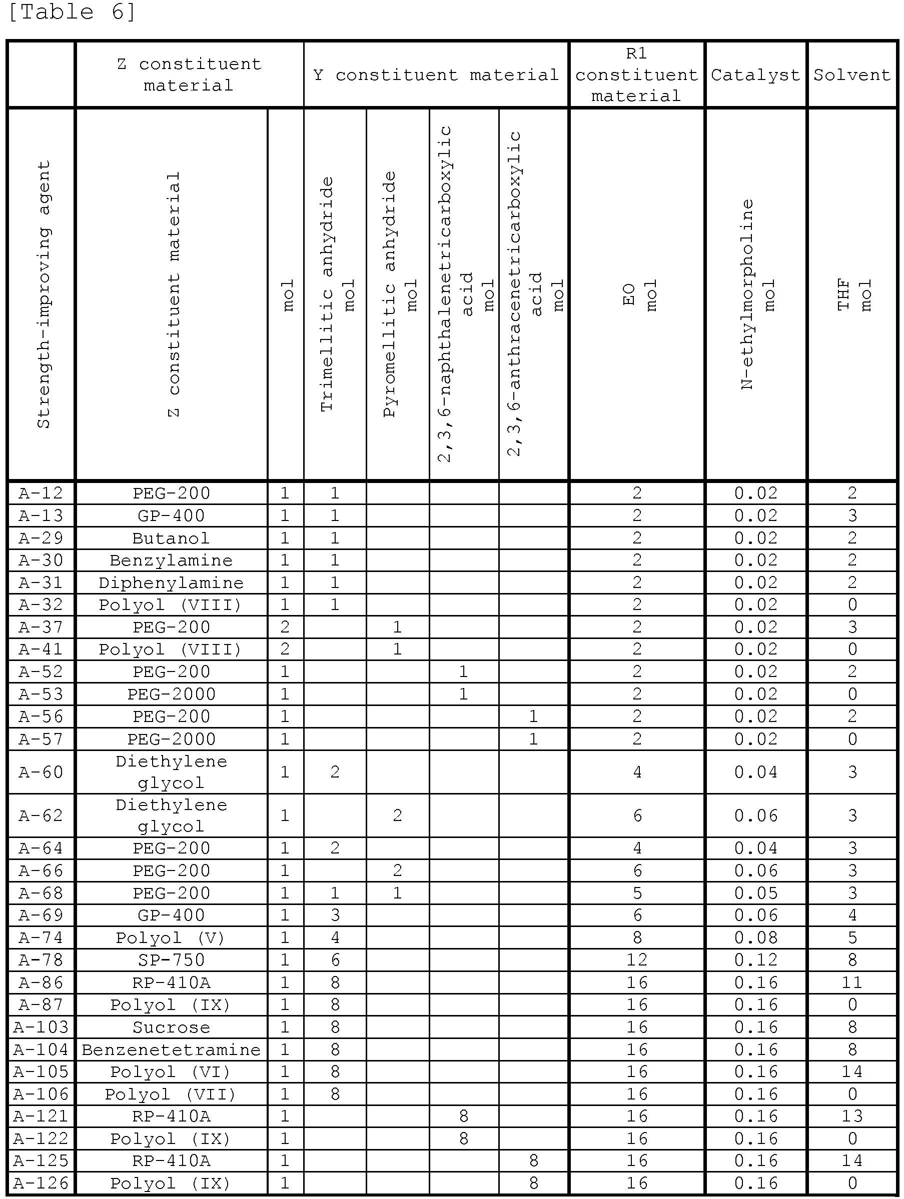

The strength-improving agents A-38 to 40, 72, 76, 80 and 109 to 112 were produced by the following production method using raw materials in the amounts (mol) shown in Table 75. Description will be made using A-38 as an example.

In the same autoclave as in Example 1, 1 mol of 1-butanol (a Z constituent material), 1 mol of pyromellitic anhydride (a Y constituent material), 0.03 mol of N-ethylmorpholine as a catalyst and 2 mol of THF as a solvent were charged and then half esterification was performed under a nitrogen atmosphere at 80 ± 10°C for 2 hours. Thereafter, 1 mol of water was added and a reaction was performed for 30 minutes, and then 3 mol of EO was added dropwise over 2 hours as an R1 constituent material while controlling to 80 ± 10°C and 0.5 MPa or less, followed by aging for 3 hours. After aging, the catalyst and the solvent were distilled off at 80 ± 10°C and 10 kPa to obtain a strength-improving agent A-12. The measured values of the respective strength-improving agents are shown in Table 1 to Table 3.

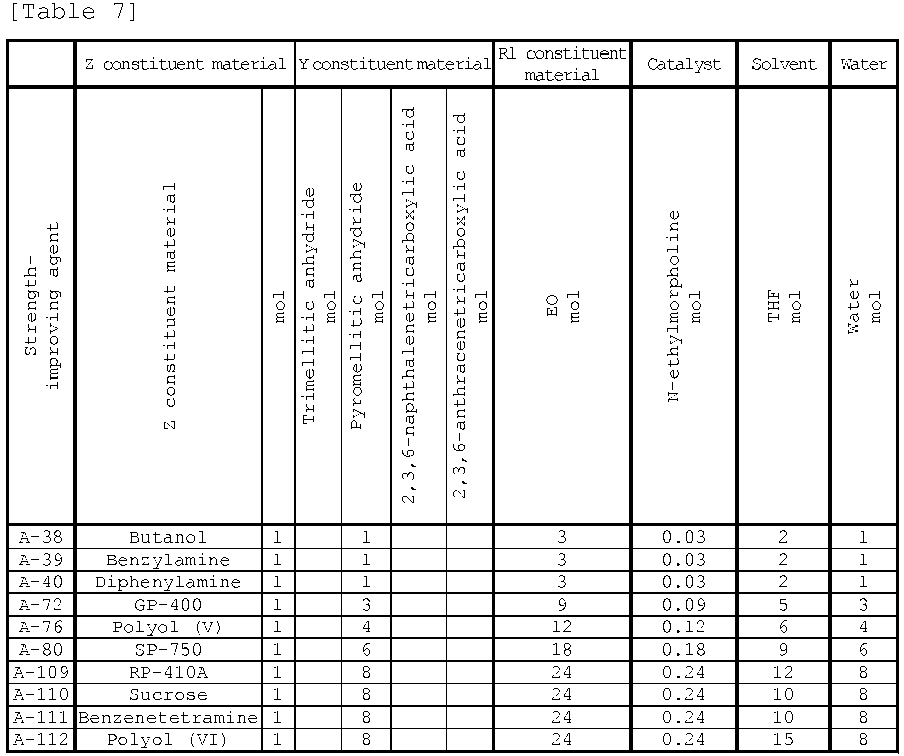

The strength-improving agents A-14 to 28, 42, 45 to 48, 88 to 102, 113 to 117 and 129 to 132 were produced by the following production method using raw materials in the amounts (mol) shown in Table 8. Description will be made using A-14 as an example.

In a reactor equipped with a stirrer, a temperature controller, a pressure controller, a condenser, a trap and a liquid circulation pump, 1 mol of PTMG-1000 (polytetramethylene glycol; having a number average molecular weight of 1000 and a hydroxyl value of 112, "PTMG-1000" manufactured by Mitsubishi Chemical Corporation) (a Z constituent material), 1 mol of trimellitic anhydride (a Y constituent material), 0.02 mol of N-ethylmorpholine as a catalyst and 5 mol of toluene as a solvent were charged, and then half esterification was performed under a nitrogen atmosphere at 80 ± 10°C and 0.1 MPa for 2 hours. Thereafter, 2 mol of PEG-200 was added as an R1 constituent material and a reaction was performed for 6 hours while controlling to 95 ± 5°C and 0.06 MPa. An operation of condensing toluene and water, which vaporize during the reaction, by the condenser, and returning toluene separated by the trap to the reactor again was continuously performed. After the reaction, the catalyst and the solvent were distilled off at 80 ± 10°C and 10 kPa to obtain a strength-improving agent A-14. The measured values of the respective strength-improving agents are shown in Table 1 to Table 3.

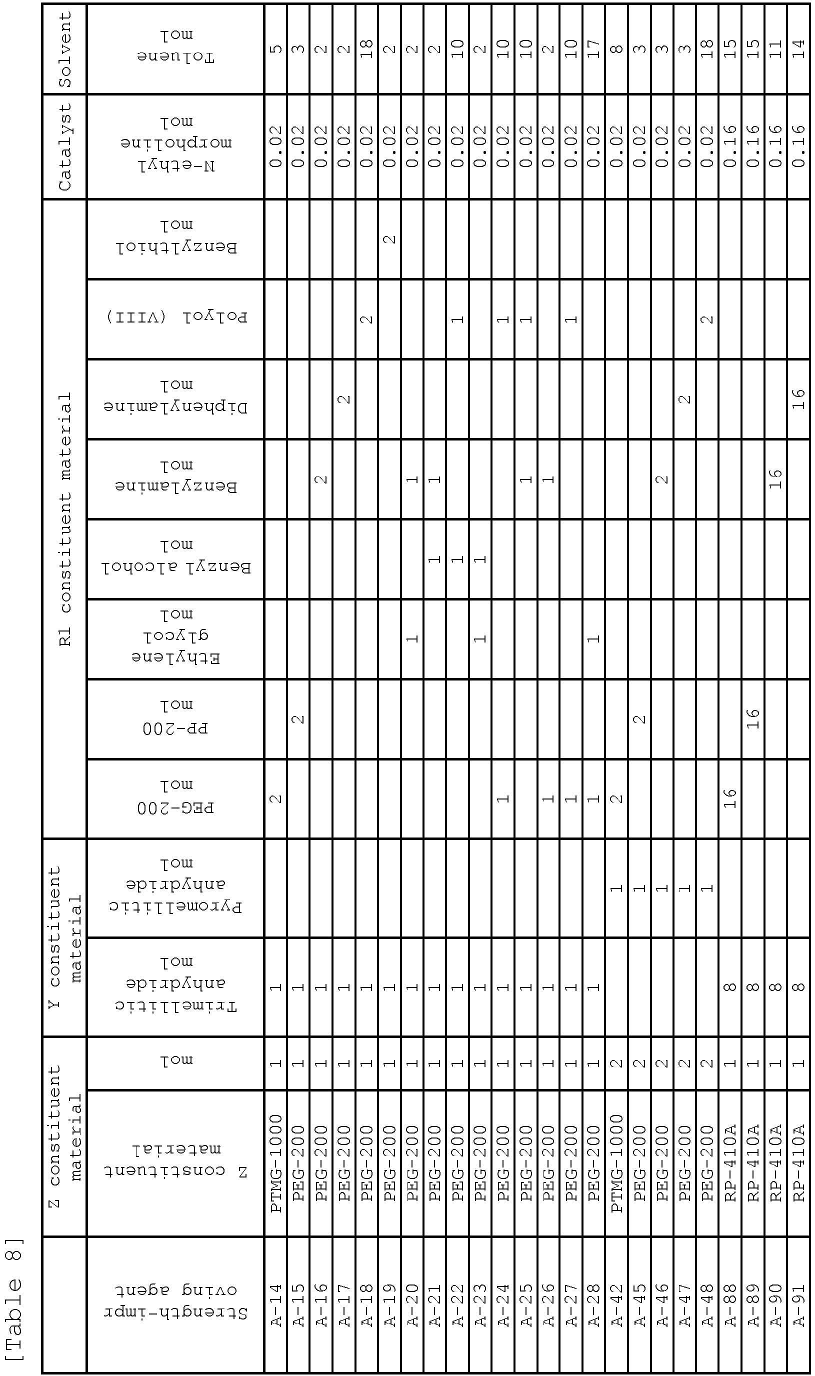

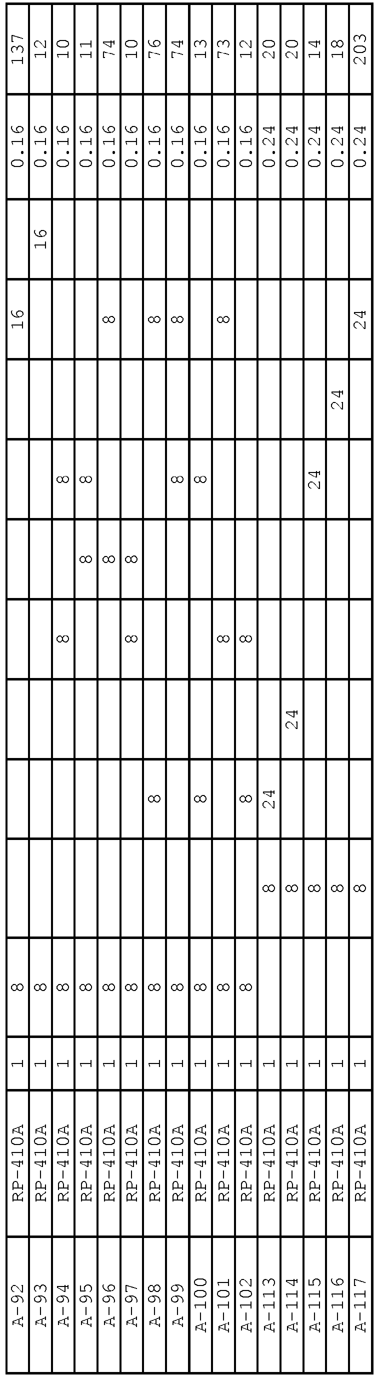

The strength-improving agents A-129 to 132 were produced by the following production method using raw materials in the amounts (mol) shown in Table 9. Description will be made using A-129 as an example.

In a reactor equipped with a stirrer, a temperature controller, a pressure controller, a condenser, a trap and a liquid circulation pump, 1 mol of diethylene glycol (a Z constituent material), 1 mol of hemimellitic acid (a Y constituent material), 0.02 mol of N-ethylmorpholine as a catalyst and 2 mol of toluene as a solvent were charged, and then half esterification was performed at 95 ± 5°C and 0.06 MPa for 4 hours . An operation of condensing toluene and water, which vaporize during the reaction, by the condenser, and returning toluene separated by the trap to the reactor again was continuously performed. Thereafter, 2 mol of ethylene glycol was added as an R1 constituent material and a reaction was performed for 6 hours while controlling to 95 ± 5°C and 0.06 MPa. An operation of condensing toluene and water, which vaporize during the reaction, by the condenser, and returning toluene separated by the trap to the reactor again was continuously performed. After the reaction, the catalyst and the solvent were distilled off at 80 ± 10°C and 10 kPa to obtain a strength-improving agent A-129. The measured values of the respective strength-improving agents are shown in Table 3.

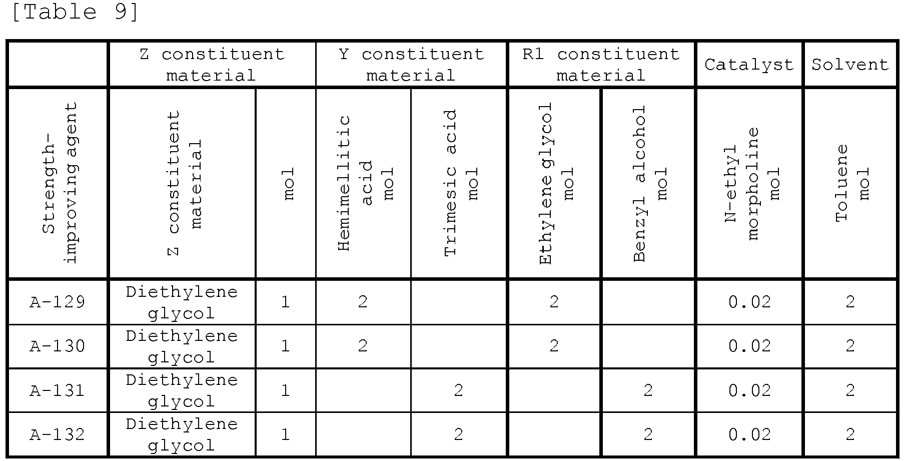

### <Examples 133 to 268 Production of Polyol Compositions for Production of Urethane Foam>

Various strength-improving agents (A) were mixed with various polyols (P) under a nitrogen atmosphere at 80 ± 10°C for 30 minutes to produce a polyol composition (B) for the production of urethane foam. Mixing formulations of various strength-improving agents with various polyols are as shown in Table 10 to Table 12.

**[Table 10]**

| Example | Polyol composition | Strength-improving agent (A) | | Polyol (P) | Polyol composition (B) |
|---|---|---|---|---|---|
| | | Product No. | Mixing amount % by weight | Product No. | Hydroxyl value |
| 133 | B-1 | A-19 | 2 | GP-3000NS | 56.8 |
| 134 | B-2 | A-19 | 5 | GP-3000NS | 57.9 |
| 135 | B-3 | A-19 | 10 | GP-3000NS | 59.8 |
| 136 | B-4 | A-19 | 40 | GP-3000NS | 70.8 |
| 137 | B-5 | A-19 | 2 | Polyol (VIII) | 56.8 |
| 138 | B-6 | A-19 | 5 | Polyol (VIII) | 57.9 |
| 139 | B-7 | A-19 | 10 | Polyol (VIII) | 59.8 |
| 140 | B-8 | A-19 | 40 | Polyol (VIII) | 70.8 |
| 141 | B-9 | A-19 | 2 | RP-410A | 413.5 |
| 142 | B-10 | A-19 | 5 | RP-410A | 403.6 |
| 143 | B-11 | A-19 | 10 | RP-410A | 387.3 |
| 144 | B-12 | A-19 | 40 | RP-410A | 289.2 |
| 145 | B-13 | A-29 | 2 | GP-3000NS | 61.5 |
| 146 | B-14 | A-29 | 5 | GP-3000NS | 69.6 |
| 147 | B-15 | A-29 | 10 | GP-3000NS | 83.1 |
| 148 | B-16 | A-29 | 40 | GP-3000NS | 164.1 |
| 149 | B-17 | A-29 | 2 | Polyol (VIII) | 61.5 |
| 150 | B-18 | A-29 | 5 | Polyol (VIII) | 69.6 |
| 151 | B-19 | A-29 | 10 | Polyol (VIII) | 83.1 |
| 152 | B-20 | A-29 | 40 | Polyol (VIII) | 164.1 |
| 153 | B-21 | A-29 | 2 | RP-410A | 418.1 |
| 154 | B-22 | A-29 | 5 | RP-410A | 415.3 |
| 155 | B-23 | A-29 | 10 | RP-410A | 410.6 |
| 156 | B-24 | A-29 | 40 | RP-410A | 382.5 |
| 157 | B-25 | A-33 | 2 | GP-3000NS | 55.0 |
| 158 | B-26 | A-33 | 5 | GP-3000NS | 53.3 |
| 159 | B-27 | A-33 | 10 | GP-3000NS | 50.5 |
| 160 | B-28 | A-33 | 2 | Polyol (VIII) | 55.0 |
| 161 | B-29 | A-33 | 5 | Polyol (VIII) | 53.3 |
| 162 | B-30 | A-33 | 10 | Polyol (VIII) | 50.5 |
| 163 | B-31 | A-33 | 2 | RP-410A | 411.6 |
| 164 | B-32 | A-33 | 5 | RP-410A | 399.0 |
| 165 | B-33 | A-33 | 10 | RP-410A | 378.0 |
| 166 | B-34 | A-34 | 2 | GP-3000NS | 55.0 |
| 167 | B-35 | A-34 | 5 | GP-3000NS | 53.3 |
| 168 | B-36 | A-34 | 10 | GP-3000NS | 50.5 |
| 169 | B-37 | A-34 | 2 | Polyol (VIII) | 55.0 |
| 170 | B-38 | A-34 | 5 | Polyol (VIII) | 53.3 |
| 171 | B-39 | A-34 | 10 | Polyol (VIII) | 50.5 |
| 172 | B-40 | A-34 | 2 | RP-410A | 411.6 |
| 173 | B-41 | A-34 | 5 | RP-410A | 399.0 |
| 174 | B-42 | A-34 | 10 | RP-410A | 378.0 |
| 175 | B-43 | A-36 | 2 | GP-3000NS | 55.0 |
| 176 | B-44 | A-36 | 5 | GP-3000NS | 53.3 |
| 177 | B-45 | A-36 | 10 | GP-3000NS | 50.5 |
| 178 | B-46 | A-36 | 2 | Polyol (VIII) | 55.0 |
| 179 | B-47 | A-36 | 5 | Polyol (VIII) | 53.3 |
| 180 | B-48 | A-36 | 10 | Polyol (VIII) | 50.5 |

**[Table 11]**

| Example | Polyol composition | Strength-improving agent (A) | | Polyol (P) | Polyol composition (B) |
|---|---|---|---|---|---|
| | | Product No. | Mixing amount % by weight | Product No. | Hydroxyl value |
| 181 | B-49 | A-36 | 2 | RP-410A | 411.6 |
| 182 | B-50 | A-36 | 5 | RP-410A | 399.0 |
| 183 | B-51 | A-36 | 10 | RP-410A | 378.0 |
| 184 | B-52 | A-64 | 2 | GP-3000NS | 60.9 |
| 185 | B-53 | A-64 | 5 | GP-3000NS | 68.1 |
| 186 | B-54 | A-64 | 10 | GP-3000NS | 80.0 |
| 187 | B-55 | A-64 | 40 | GP-3000NS | 151.8 |
| 188* | B-56 | A-64 | 90 | GP-3000NS | 271.4 |
| 189 | B-57 | A-64 | 2 | Polyol (VIII) | 60.9 |
| 190 | B-58 | A-64 | 5 | Polyol (VIII) | 68.1 |
| 191 | B-59 | A-64 | 10 | Polyol (VIII) | 80.0 |
| 192 | B-60 | A-64 | 40 | Polyol (VIII) | 151.8 |
| 193* | B-61 | A-64 | 90 | Polyol (VIII) | 271.4 |
| 194 | B-62 | A-64 | 2 | RP-410A | 417.5 |
| 195 | B-63 | A-64 | 5 | RP-410A | 413.8 |
| 196 | B-64 | A-64 | 10 | RP-410A | 407.5 |
| 197 | B-65 | A-64 | 40 | RP-410A | 370.1 |
| 198* | B-66 | A-64 | 90 | RP-410A | 307.8 |
| 199 | B-67 | A-82 | 2 | GP-3000NS | 55.0 |
| 200 | B-68 | A-82 | 5 | GP-3000NS | 53.3 |
| 201 | B-69 | A-82 | 10 | GP-3000NS | 50.5 |
| 202 | B-70 | A-82 | 2 | Polyol (VIII) | 55.0 |
| 203 | B-71 | A-82 | 5 | Polyol (VIII) | 53.3 |
| 204 | B-72 | A-82 | 10 | Polyol (VIII) | 50.5 |
| 205 | B-73 | A-82 | 2 | RP-410A | 411.6 |
| 206 | B-74 | A-82 | 5 | RP-410A | 399.0 |
| 207 | B-75 | A-82 | 10 | RP-410A | 378.0 |
| 208 | B-76 | A-83 | 2 | GP-3000NS | 55.0 |
| 209 | B-77 | A-83 | 5 | GP-3000NS | 53.3 |
| 210 | B-78 | A-83 | 10 | GP-3000NS | 50.5 |
| 211 | B-79 | A-83 | 2 | Polyol (VIII) | 55.0 |
| 212 | B-80 | A-83 | 5 | Polyol (VIII) | 53.3 |
| 213 | B-81 | A-83 | 10 | Polyol (VIII) | 50.5 |
| 214 | B-82 | A-83 | 2 | RP-410A | 411.6 |
| 215 | B-83 | A-83 | 5 | RP-410A | 399.0 |
| 216 | B-84 | A-83 | 10 | RP-410A | 378.0 |
| 217 | B-85 | A-86 | 2 | GP-3000NS | 60.4 |
| 218 | B-86 | A-86 | 5 | GP-3000NS | 66.9 |
| 219 | B-87 | A-86 | 10 | GP-3000NS | 77.6 |
| 220 | B-88 | A-86 | 40 | GP-3000NS | 142.2 |
| 221 | B-89 | A-86 | 2 | Polyol (VIII) | 60.4 |
| 222 | B-90 | A-86 | 5 | Polyol (VIII) | 66.9 |
| 223 | B-91 | A-86 | 10 | Polyol (VIII) | 77.6 |
| 224 | B-92 | A-86 | 40 | Polyol (VIII) | 142.2 |
| 225 | B-93 | A-86 | 2 | RP-410A | 417.0 |

| | | | | | |
|---|---|---|---|---|---|
| * = not claimed | | | | | |

**[Table 12]**

| Example | Polyol composition | Strength-improving agent (A) | | Polyol (P) | Polyol composition (B) |
|---|---|---|---|---|---|
| | | Product No. | Mixing amount % by weight | Product No. | Hydroxyl value |
| 226 | B-94 | A-86 | 5 | RP-410A | 412.6 |
| 227 | B-95 | A-86 | 10 | RP-410A | 405.1 |
| 228 | B-96 | A-86 | 40 | RP-410A | 360.5 |
| 229 | B-97 | A-90 | 2 | GP-3000NS | 55.0 |
| 230 | B-98 | A-90 | 5 | GP-3000NS | 53.3 |
| 231 | B-99 | A-90 | 10 | GP-3000NS | 50.5 |
| 232 | B-100 | A-90 | 2 | Polyol (VIII) | 55.0 |
| 233 | B-101 | A-90 | 5 | Polyol (VIII) | 53.3 |
| 234 | B-102 | A-90 | 10 | Polyol (VIII) | 50.5 |
| 235 | B-103 | A-90 | 2 | RP-410A | 411.6 |
| 236 | B-104 | A-90 | 5 | RP-410A | 399.0 |
| 237 | B-105 | A-90 | 10 | RP-410A | 378.0 |
| 238 | B-106 | A-19 | 2 | Polyol (X) | 31.8 |
| 239 | B-107 | A-19 | 5 | Polyol (X) | 33.7 |
| 240 | B-108 | A-19 | 10 | Polyol (X) | 36.8 |
| 241 | B-109 | A-19 | 40 | Polyol (X) | 55.5 |
| 242 | B-110 | A-29 | 2 | Polyol (X) | 36.5 |
| 243 | B-111 | A-29 | 5 | Polyol (X) | 45.4 |
| 244 | B-112 | A-29 | 10 | Polyol (X) | 60.2 |
| 245 | B-113 | A-33 | 2 | Polyol (X) | 30.0 |
| 246 | B-114 | A-33 | 5 | Polyol (X) | 29.1 |
| 247 | B-115 | A-33 | 10 | Polyol (X) | 27.5 |
| 248 | B-116 | A-34 | 2 | Polyol (X) | 30.0 |
| 249 | B-117 | A-34 | 5 | Polyol (X) | 29.1 |
| 250 | B-118 | A-34 | 10 | Polyol (X) | 27.5 |
| 251 | B-119 | A-36 | 2 | Polyol (X) | 30.0 |
| 252 | B-120 | A-36 | 5 | Polyol (X) | 29.1 |
| 253 | B-121 | A-36 | 10 | Polyol (X) | 27.5 |
| 254 | B-122 | A-64 | 2 | Polyol (X) | 35.9 |
| 255 | B-123 | A-64 | 5 | Polyol (X) | 43.8 |
| 256 | B-124 | A-64 | 10 | Polyol (X) | 57.1 |
| 257 | B-125 | A-82 | 2 | Polyol (X) | 30.0 |
| 258 | B-126 | A-82 | 5 | Polyol (X) | 29.1 |
| 259 | B-127 | A-82 | 10 | Polyol (X) | 27.5 |
| 260 | B-128 | A-83 | 2 | Polyol (X) | 30.0 |
| 261 | B-129 | A-83 | 5 | Polyol (X) | 29.1 |
| 262 | B-130 | A-83 | 10 | Polyol (X) | 27.5 |
| 263 | B-131 | A-86 | 2 | Polyol (X) | 35.4 |
| 264 | B-132 | A-86 | 5 | Polyol (X) | 42. 6 |
| 265 | B-133 | A-86 | 10 | Polyol (X) | 54.7 |
| 266 | B-134 | A-90 | 2 | Polyol (X) | 30.0 |
| 267 | B-135 | A-90 | 5 | Polyol (X) | 29.1 |
| 268 | B-136 | A-90 | 10 | Polyol (X) | 27.5 |

### Comparative Example 1

SANNIX GP-3000NS (manufactured by Sanyo Chemical Industries, Ltd. ; a glycerin PO adduct having a hydroxyl value of 56.0) was designated as a polyol (H-1). The measured values of (H-1) are as follows:
the hydroxyl value (mgKOH/g) = 56. 0, the content of Y (%by weight) = 0, and the aromatic ring concentration (mmol/g) = 0.0.

### Comparative Example 2

SANNIX GP-1500 (manufactured by Sanyo Chemical Industries, Ltd.; a glycerin PO adduct having a hydroxyl value of 112.0) was designated as a polyol (H-2) . The measured values of (H-2) are as follows:
the hydroxyl value (mgKOH/g) = 112.0, the content of Y (% by weight) = 0, and the aromatic ring concentration (mmol/g) = 0.0.

### Comparative Example 3

In the same autoclave as in Example 1, 1 mol of a glycerin PO adduct (SANNIX GP-1500 manufactured by Sanyo Chemical Industries, Ltd.; having a number average molecular weight of 1500 and a hydroxyl value of 112.0), 6 mol of phthalic anhydride and 0.010 mol of an alkali catalyst (N-ethylmorpholine) were charged and then reacted under a nitrogen atmosphere at 0.20 MPa and 120 ± 10°C for 1 hour, thereby performing half esterification. After the half esterification, 6 mol of PO was added dropwise over 5 hours while controlling to 120 ± 10°C and a pressure of 0.50 MPa or less, followed by aging at 120 ± 10°C for 1 hour. After completion of the aging, the alkali catalyst was removed under reduced pressure at 0.1 MPa for 1 hour to obtain a polyol (H-3). The measured values of (H-3) are as follows: the hydroxyl value (mgKOH/g) = 63, the content of Y (% by weight) = 0, and the aromatic ring concentration (mmol/g) = 2.26.

### Comparative Example 4

In the same autoclave as in Example 1, 1 mol of a glycerin PO adduct (SANNIX GP-1500 manufactured by Sanyo Chemical Industries, Ltd.; having a number average molecular weight of 1500 and a hydroxyl value of 112.0), 6 mol of phthalic anhydride and 0.010 mol of an alkali catalyst (N-ethylmorpholine) were charged and reacted under a nitrogen atmosphere at 0.20 MPa and 120 ± 10°C for 1 hour, thereby performing half esterification. After the half esterification, 20 mol of EO was added dropwise over 5 hours while controlling to 80 ± 10°C and a pressure of 0.50 MPa or less, followed by aging at 80 ± 10°C for 1 hour. After completion of the aging, the alkali catalyst was removed under reduced pressure at 0.1 MPa for 1 hour to obtain a polyol (H-4). The measured values of (H-4) are as follows: the hydroxyl value (mgKOH/g) = 51.2, the content of Y (% by weight) = 0, and the aromatic ring concentration (mmol/g) = 1.82.

### Comparative Example 5

In the same autoclave as in Example 1, 1 mol of GP-3000NS and 0.22 mol of KOH were charged and then dehydrated at 110 ± 5°C and 10 kPa for 1 hour. After completion of the dehydration, 36.2 mol of PO was added dropwise over 4 hours while controlling to 0.5 MPa or less. Aging was performed for 3 hours after completion of the dropwise addition. After completion of the aging and cooling to 90 ± 5°C, 2% by weight of water and 2% by weight of KYOWAAD 600 (manufactured by Kyowa Chemical Industry Co., Ltd.; synthetic silicate) were added, followed by a treatment for 1 hour. The reaction product was removed from the autoclave, filtered using a 1 micron filter paper and then dehydrated under reduced pressure to obtain a polyol (H-5) . The measured values of (H-5) are as follows:
the hydroxyl value (mgKOH/g) = 33.7, the amount of the at least trivalent aromatic polycarboxylic acid (% by weight) = 0, and the aromatic ring concentration (mmol/g) = 0.0.

### <Examples 269 to 446 and Comparative Examples 6 to 10 Production of Soft Slab Foams>

Using a strength-improving agent A and a strength-improving agent-containing polyol composition B, in accordance with the mixing formulations shown in Table 13 to Table 18, foaming was performed under the following foaming conditions to produce a soft polyurethane foam. The soft polyurethane foam was left to stand one day and night (at a temperature of 25°C and a humidity of 50% for 24 hours), and then the core density (kg/m³), hardness (25%ILD, kgf/314 cm²), tear strength (kgf/cm), tensile strength (kgf/cm²) and elongation (%) were measured.

### (Foaming Conditions)

BOX SIZE: 250 mm × 250 mm × 250 mm
Material: Lumber
Mixing method: Hand mixing (a foaming method in which a required amount of a requisite reagent is charged in a predetermined container and a stirring blade is inserted into the container, followed by stirring at 5000 revolutions/minute for 6 to 20 seconds)
Mixing time: 6 to 20 seconds
Revolutions of stirring blade: 5000 revolutions/minute

Polyurethane foam raw materials in Examples 269 to 446 and Comparative Examples 6 to 10 are as follows.

### (1) Organic polyisocyanate component (D-1)

TDI : NCO% = 48.3 (trade name: CORONATE T-80 manufactured by Nippon Polyurethane Industry Co., Ltd.)

### (2) Foaming agent

Foaming agent: Water

### (3) Catalyst

Catalyst-1: "DABCO-33LV" manufactured by Air Products Japan, Inc. (a 33% by weight dipropylene glycol solution of triethylenediamine)
Catalyst-2: Tin octylate (trade name: "NEOSTANN U-28" manufactured by NITTO KASEI CO., LTD. (stannous octylate))

### (4) Foam stabilizer

Foam stabilizer-1: "L-540" manufactured by Dow Corning Toray Co., Ltd.

### <Test Methods>

Methods for measurement of the respective items are as follows. The obtained results are shown in Table 13 to Table 18.
- Methods for measurement of physical properties of the foam, and units are shown below.
   Core density: measured in accordance with JIS K6400, unit is kg/m³
   Hardness (25%-ILD) : measured in accordance with JIS K6400, unit is N/314 cm²
   Elongation rate: measured in accordance with JIS K6400, unit is %
   Tensile strength: measured in accordance with JIS K6400, unit is kgf/cm²
   Tear strength: measured in accordance with JIS K6400, unit is kgf/cm

[Table 13]

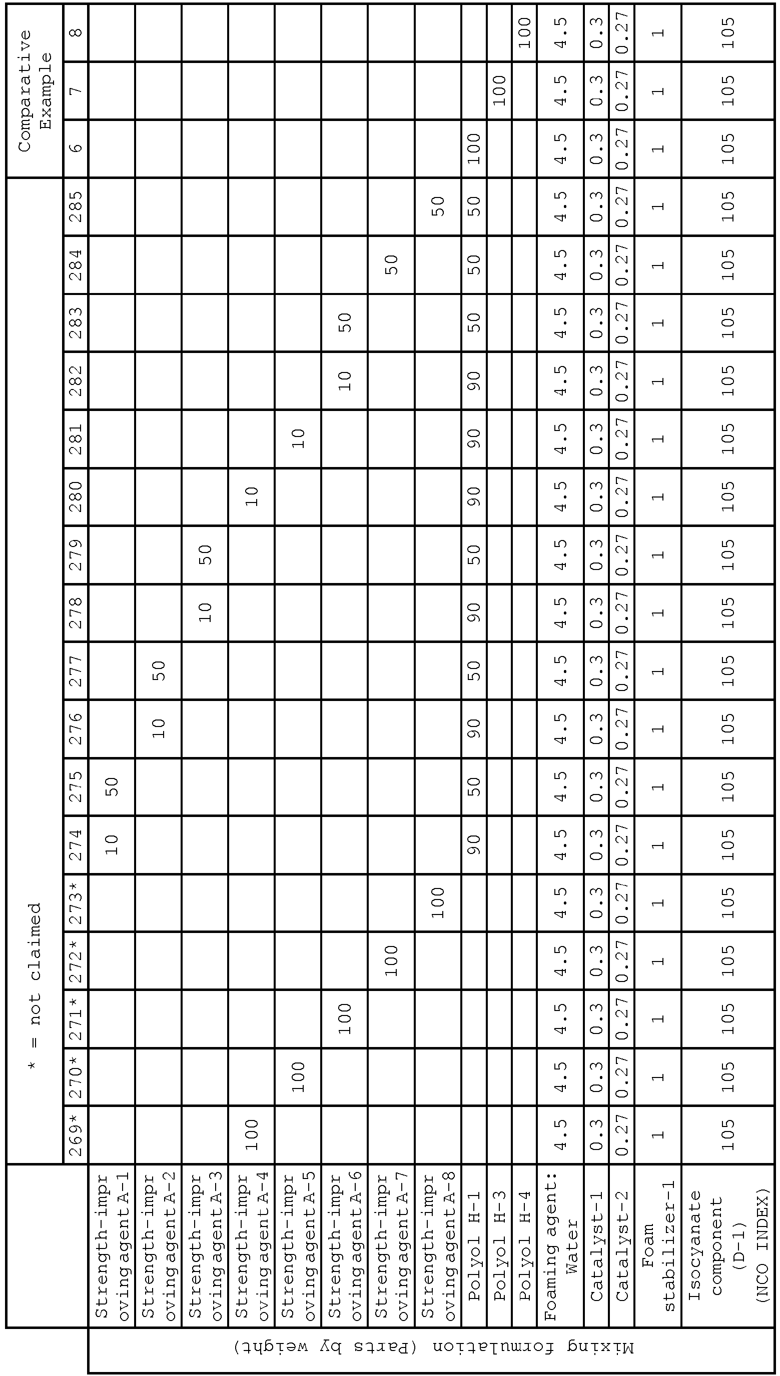

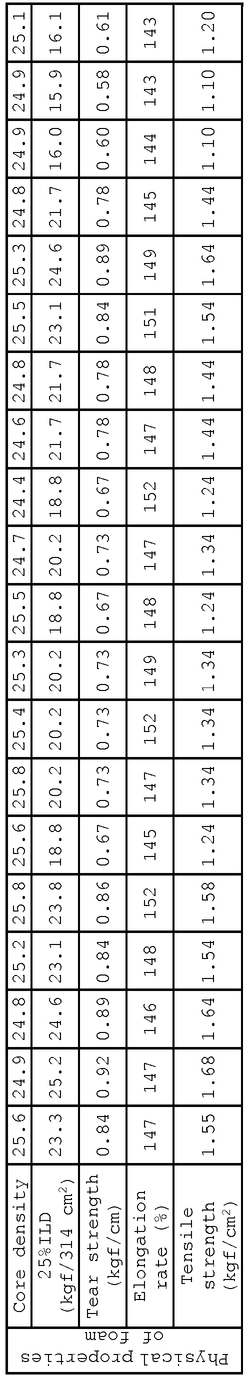

**[Table 14]**

| Example | Strength-improving agent | Mixing formulation (Parts by weight) | | | | | | | | | Physical properties of foam | | | | |
|---|---|---|---|---|---|---|---|---|---|---|---|---|---|---|---|
| | | Polyol component | | | | Foaming agent | Catalyst | | Foam stabilizer -1 | Isocyanate D-1 INDEX | Core density | 25%ILD | Tear strength | Tensile strength | Elongation |
| | Product No. | Strength-improving agent | H-1 | H-3 | H-4 | Water | Catalyst -1 | Catalyst -2 | | | kg/m³ | kgf/ 314 m² | kgf/cm | kgf/cm² | % |
| 286 | A-9 | 5 | 95 | | | 4.5 | 0.3 | 0.27 | 1.0 | 105 | 25.3 | 21.5 | 0.78 | 1.43 | 150 |
| 287 | A-10 | 5 | 95 | | | 4.5 | 0.3 | 0.27 | 1.0 | 105 | 25.2 | 21.2 | 0.76 | 1.40 | 145 |
| 288 | A-11 | 5 | 95 | | | 4.5 | 0.3 | 0.27 | 1.0 | 105 | 24.9 | 21.2 | 0.77 | 1.41 | 147 |
| 289 | A-12 | 5 | 95 | | | 4.5 | 0.3 | 0.27 | 1.0 | 105 | 25.0 | 21.4 | 0.77 | 1.42 | 151 |
| 290 | A-13 | 5 | 95 | | | 4.5 | 0.3 | 0.27 | 1.0 | 105 | 25.0 | 20.9 | 0.75 | 1.38 | 146 |
| 291 | A-14 | 5 | 95 | | | 4.5 | 0.3 | 0.27 | 1.0 | 105 | 25.4 | 19.7 | 0.71 | 1.30 | 150 |
| 292 | A-15 | 5 | 95 | | | 4.5 | 0.3 | 0.27 | 1.0 | 105 | 25.6 | 20.8 | 0.75 | 1.37 | 144 |
| 293 | A-16 | 5 | 95 | | | 4.5 | 0.3 | 0.27 | 1.0 | 105 | 24.9 | 20.5 | 0.74 | 1.36 | 152 |
| 294 | A-17 | 5 | 95 | | | 4.5 | 0.3 | 0.27 | 1.0 | 105 | 25.4 | 20.3 | 0.73 | 1.34 | 148 |
| 295 | A-18 | 2 | 98 | | | 4.5 | 0.3 | 0.27 | 1.0 | 105 | 25.6 | 16.3 | 0.63 | 1.13 | 149 |
| 296 | A-18 | 5 | 95 | | | 4.5 | 0.3 | 0.27 | 1.0 | 105 | 25.0 | 17.6 | 0.64 | 1.15 | 146 |
| 297 | A-18 | 10 | 90 | | | 4.5 | 0.3 | 0.27 | 1.0 | 105 | 25.4 | 18.6 | 0.67 | 1.22 | 145 |
| 298 | A-18 | 20 | 80 | | | 4.5 | 0.3 | 0.27 | 1.0 | 105 | 25.4 | 19.6 | 0.71 | 1.30 | 151 |
| 299 | A-18 | 5 | 95 | | | 4.5 | 0.3 | 0.27 | 1.0 | 105 | 25.4 | 17.6 | 0.63 | 1.15 | 147 |
| 300 | A-19 | 5 | 95 | | | 4.5 | 0.3 | 0.27 | 1.0 | 105 | 25.6 | 20.0 | 0.72 | 1.32 | 150 |
| 301 | A-20 | 5 | 95 | | | 4.5 | 0.3 | 0.27 | 1.0 | 105 | 25.5 | 20.7 | 0.74 | 1.37 | 147 |
| 302 | A-21 | 5 | 95 | | | 4.5 | 0.3 | 0.27 | 1.0 | 105 | 25.6 | 20.5 | 0.74 | 1.36 | 150 |
| 303 | A-22 | 5 | 95 | | | 4.5 | 0.3 | 0.27 | 1.0 | 105 | 25.0 | 18.5 | 0.66 | 1.22 | 149 |
| 304 | A-23 | 5 | 95 | | | 4.5 | 0.3 | 0.27 | 1.0 | 105 | 25.5 | 21.3 | 0.77 | 1.41 | 152 |
| 305 | A-24 | 5 | 95 | | | 4.5 | 0.3 | 0.27 | 1.0 | 105 | 25.1 | 18.4 | 0.66 | 1.21 | 149 |
| 306 | A-25 | 5 | 95 | | | 4.5 | 0.3 | 0.27 | 1.0 | 105 | 25.3 | 18.2 | 0.65 | 1.20 | 149 |
| 307 | A-26 | 5 | 95 | | | 4.5 | 0.3 | 0.27 | 1.0 | 105 | 25.2 | 20.3 | 0.73 | 1.34 | 151 |
| 308 | A-27 | 5 | 95 | | | 4.5 | 0.3 | 0.27 | 1.0 | 105 | 24.8 | 18.5 | 0.66 | 1.22 | 148 |
| 309 | A-28 | 5 | 95 | | | 4.5 | 0.3 | 0.27 | 1.0 | 105 | 25.2 | 21.1 | 0.76 | 1.40 | 146 |
| 310 | A-29 | 5 | 95 | | | 4.5 | 0.3 | 0.27 | 1.0 | 105 | 24.8 | 21.9 | 0.79 | 1.45 | 151 |
| 311 | A-30 | 5 | 95 | | | 4.5 | 0.3 | 0.27 | 1.0 | 105 | 24.9 | 21.0 | 0.76 | 1.39 | 148 |
| 312 | A-31 | 5 | 95 | | | 4.5 | 0.3 | 0.27 | 1.0 | 105 | 25.0 | 20.8 | 0.75 | 1.38 | 151 |
| 313 | A-32 | 5 | 95 | | | 4.5 | 0.3 | 0.27 | 1.0 | 105 | 25.5 | 18.6 | 0.67 | 1.22 | 146 |
| 314 | A-32 | 50 | 50 | | | 4.5 | 0.3 | 0.27 | 1.0 | 105 | 25.3 | 22.0 | 0.79 | 1.46 | 150 |
| 315* | A-32 | 100 | 0 | | | 4.5 | 0.3 | 0.27 | 1.0 | 105 | 24.9 | 23.0 | 0.83 | 1.53 | 144 |
| 316 | A-33 | 5 | 95 | | | 4.5 | 0.3 | 0.27 | 1.0 | 105 | 25.3 | 21.5 | 0.78 | 1.43 | 148 |
| 317 | A-34 | 5 | 95 | | | 4.5 | 0.3 | 0.27 | 1.0 | 105 | 25.2 | 19.1 | 0.69 | 1.26 | 150 |
| 318 | A-35 | 5 | 95 | | | 4.5 | 0.3 | 0.27 | 1.0 | 105 | 24.8 | 21.2 | 0.77 | 1.40 | 145 |
| 319 | A-36 | 5 | 95 | | | 4.5 | 0.3 | 0.27 | 1.0 | 105 | 24.9 | 20.0 | 0.72 | 1.32 | 151 |
| 320 | A-37 | 5 | 95 | | | 4.5 | 0.3 | 0.27 | 1.0 | 105 | 25.6 | 21.9 | 0.79 | 1.45 | 151 |

| | | | | | | | | | | | | | | | |
|---|---|---|---|---|---|---|---|---|---|---|---|---|---|---|---|
| * = not claimed | | | | | | | | | | | | | | | |

**[Table 15]**

| Example | Strength-improving agent | Mixing formulation (Parts by weight) | | | | | | | | | Physical properties of foam | | | | |
|---|---|---|---|---|---|---|---|---|---|---|---|---|---|---|---|
| | | Polyol component | | | | Foaming agent | Catalyst | | Foam stabilizer -1 | Isocyanate D-1 INDEX | Core density | 25%ILD | Tear strength | Tensile strength | Elongation |
| | Product No. | Strength-improving agent | H-1 | H-3 | H-4 | Water | Catalyst -1 | Catalyst -2 | | | kg/m³ | kgf/ 314 m² | kgf/cm | kgf/cm² | % |
| 321 | A-38 | 5 | 95 | | | 4.5 | 0.3 | 0.27 | 1.0 | 105 | 25.1 | 22.7 | 0.82 | 1.50 | 147 |
| 322 | A-39 | 5 | 95 | | | 4.5 | 0.3 | 0.27 | 1.0 | 105 | 25.2 | 21.7 | 0.78 | 1.44 | 150 |
| 323 | A-40 | 5 | 95 | | | 4.5 | 0.3 | 0.27 | 1.0 | 105 | 24.9 | 21.5 | 0.78 | 1.42 | 150 |
| 324 | A-41 | 5 | 95 | | | 4.5 | 0.3 | 0.27 | 1.0 | 105 | 24.9 | 18.6 | 0.67 | 1.23 | 144 |
| 325 | A-42 | 5 | 95 | | | 4.5 | 0.3 | 0.27 | 1.0 | 105 | 25.0 | 20.0 | 0.72 | 1.32 | 151 |
| 326 | A-43 | 5 | 95 | | | 4.5 | 0.3 | 0.27 | 1.0 | 105 | 25.3 | 22.4 | 0.81 | 1.48 | 151 |
| 327 | A-44 | 5 | 95 | | | 4.5 | 0.3 | 0.27 | 1.0 | 105 | 24.8 | 20.1 | 0.72 | 1.33 | 149 |
| 328 | A-45 | 5 | 95 | | | 4.5 | 0.3 | 0.27 | 1.0 | 105 | 24.8 | 21.4 | 0.77 | 1.42 | 151 |
| 329 | A-46 | 5 | 95 | | | 4.5 | 0.3 | 0.27 | 1.0 | 105 | 25.1 | 21.0 | 0.76 | 1.39 | 145 |
| 330 | A-47 | 5 | 95 | | | 4.5 | 0.3 | 0.27 | 1.0 | 105 | 25.5 | 20.8 | 0.75 | 1.37 | 151 |
| 331 | A-48 | 5 | 95 | | | 4.5 | 0.3 | 0.27 | 1.0 | 105 | 24.9 | 18.6 | 0.67 | 1.22 | 147 |
| 332 | A-49 | 5 | 95 | | | 4.5 | 0.3 | 0.27 | 1.0 | 105 | 25.4 | 22.0 | 0.79 | 1.45 | 150 |
| 333 | A-50 | 5 | 95 | | | 4.5 | 0.3 | 0.27 | 1.0 | 105 | 25.3 | 21.7 | 0.78 | 1.44 | 150 |
| 334 | A-51 | 5 | 95 | | | 4.5 | 0.3 | 0.27 | 1.0 | 105 | 24.9 | 21.8 | 0.79 | 1.44 | 149 |
| 335 | A-52 | 5 | 95 | | | 4.5 | 0.3 | 0.27 | 1.0 | 105 | 24.9 | 18.6 | 0.67 | 1.22 | 152 |
| 336 | A-53 | 5 | 95 | | | 4.5 | 0.3 | 0.27 | 1.0 | 105 | 25.6 | 17.7 | 0.63 | 1.16 | 145 |
| 337 | A-54 | 5 | 95 | | | 4.5 | 0.3 | 0.27 | 1.0 | 105 | 25.6 | 18.6 | 0.67 | 1.23 | 146 |
| 338 | A-55 | 5 | 95 | | | 4.5 | 0.3 | 0.27 | 1.0 | 105 | 25.0 | 17.7 | 0.63 | 1.16 | 147 |
| 339 | A-56 | 5 | 95 | | | 4.5 | 0.3 | 0.27 | 1.0 | 105 | 25.0 | 18.5 | 0.67 | 1.22 | 152 |
| 340 | A-57 | 5 | 95 | | | 4.5 | 0.3 | 0.27 | 1.0 | 105 | 25.6 | 17.7 | 0.63 | 1.16 | 148 |
| 341 | A-58 | 5 | 95 | | | 4.5 | 0.3 | 0.27 | 1.0 | 105 | 25.4 | 18.6 | 0.67 | 1.22 | 151 |
| 342 | A-59 | 5 | 95 | | | 4.5 | 0.3 | 0.27 | 1.0 | 105 | 25.4 | 17.7 | 0.63 | 1.16 | 151 |
| 343 | A-60 | 5 | 95 | | | 4.5 | 0.3 | 0.27 | 1.0 | 105 | 24.8 | 22.0 | 0.79 | 1.46 | 145 |
| 344 | A-61 | 5 | 95 | | | 4.5 | 0.3 | 0.27 | 1.0 | 105 | 25.4 | 21.6 | 0.78 | 1.43 | 147 |
| 345 | A-62 | 5 | 95 | | | 4.5 | 0.3 | 0.27 | 1.0 | 105 | 25.3 | 22.7 | 0.82 | 1.51 | 149 |
| 346 | A-63 | 5 | 95 | | | 4.5 | 0.3 | 0.27 | 1.0 | 105 | 25.4 | 22.3 | 0.81 | 1.48 | 147 |
| 347 | A-64 | 5 | 95 | | | 4.5 | 0.3 | 0.27 | 1.0 | 105 | 25.4 | 21.8 | 0.79 | 1.44 | 146 |
| 348 | A-65 | 5 | 95 | | | 4.5 | 0.3 | 0.27 | 1.0 | 105 | 25.3 | 21.5 | 0.77 | 1.42 | 147 |
| 349 | A-66 | 5 | 95 | | | 4.5 | 0.3 | 0.27 | 1.0 | 105 | 25.1 | 22.6 | 0.82 | 1.50 | 146 |
| 350 | A-67 | 5 | 95 | | | 4.5 | 0.3 | 0.27 | 1.0 | 105 | 25.2 | 22.2 | 0.80 | 1.47 | 146 |
| 351 | A-68 | 5 | 95 | | | 4.5 | 0.3 | 0.27 | 1.0 | 105 | 24.8 | 22.2 | 0.80 | 1.47 | 147 |
| 352 | A-69 | 5 | 95 | | | 4.5 | 0.3 | 0.27 | 1.0 | 105 | 25.4 | 21.7 | 0.78 | 1.43 | 150 |
| 353 | A-70 | 5 | 95 | | | 4.5 | 0.3 | 0.27 | 1.0 | 105 | 24.9 | 21.4 | 0.77 | 1.41 | 146 |
| 354 | A-71 | 5 | 95 | | | 4.5 | 0.3 | 0.27 | 1.0 | 105 | 25.3 | 19.9 | 0.71 | 1.31 | 148 |
| 355 | A-73 | 5 | 95 | | | 4.5 | 0.3 | 0.27 | 1.0 | 105 | 25.3 | 22.1 | 0.80 | 1.46 | 146 |

**[Table 16]**

| Example | Strength-improving agent | Mixing formulation (Parts by weight) | | | | | | | | | Physical properties of foam | | | | |
|---|---|---|---|---|---|---|---|---|---|---|---|---|---|---|---|
| | | Polyol component | | | | Foaming agent | Catalyst | | Foam stabilizer -1 | Isocyanat e D-1 INDEX | Core density | 25%ILD | Tear strength | Tensile strength | Elongation |
| | Product No. | Strength-improving agent | H-1 | H-3 | H-4 | Water | Catalyst -1 | Catalyst -2 | | | kg/m³ | kgf/ 314 m² | kgf/cm | kgf/cm² | % |
| 356 | A-75 | 5 | 95 | | | 4.5 | 0.3 | 0.27 | 1.0 | 105 | 25.3 | 21.5 | 0.77 | 1.42 | 148 |
| 357 | A-77 | 5 | 95 | | | 4.5 | 0.3 | 0.27 | 1.0 | 105 | 25.1 | 22.2 | 0.80 | 1.47 | 145 |
| 358 | A-79 | 5 | 95 | | | 4.5 | 0.3 | 0.27 | 1.0 | 105 | 25.6 | 21.4 | 0.77 | 1.42 | 150 |
| 359 | A-81 | 5 | 95 | | | 4.5 | 0.3 | 0.27 | 1.0 | 105 | 25.2 | 22.1 | 0.80 | 1.47 | 147 |
| 360 | A-82 | 5 | 95 | | | 4.5 | 0.3 | 0.27 | 1.0 | 105 | 25.0 | 21.8 | 0.79 | 1.44 | 152 |
| 361 | A-83 | 5 | 95 | | | 4.5 | 0.3 | 0.27 | 1.0 | 105 | 25.1 | 21.0 | 0.76 | 1.39 | 150 |
| 362 | A-84 | 5 | 95 | | | 4.5 | 0.3 | 0.27 | 1.0 | 105 | 24.9 | 21.4 | 0.77 | 1.41 | 149 |
| 363 | A-85 | 5 | 95 | | | 4.5 | 0.3 | 0.27 | 1.0 | 105 | 25.4 | 21.4 | 0.77 | 1.42 | 152 |
| 364 | A-90 | 5 | 95 | | | 4.5 | 0.3 | 0.27 | 1.0 | 105 | 25.0 | 20.7 | 0.75 | 1.37 | 152 |
| 365 | A-91 | 5 | 95 | | | 4.5 | 0.3 | 0.27 | 1.0 | 105 | 24.8 | 20.4 | 0.73 | 1.35 | 150 |
| 366 | A-93 | 5 | 95 | | | 4.5 | 0.3 | 0.27 | 1.0 | 105 | 24.9 | 20.1 | 0.73 | 1.33 | 152 |
| 367 | A-95 | 5 | 95 | | | 4.5 | 0.3 | 0.27 | 1.0 | 105 | 25.6 | 20.7 | 0.75 | 1.37 | 149 |
| 368 | A-98 | 5 | 95 | | | 4.5 | 0.3 | 0.27 | 1.0 | 105 | 25.6 | 17.6 | 0.63 | 1.16 | 149 |
| 369 | A-101 | 5 | 95 | | | 4.5 | 0.3 | 0.27 | 1.0 | 105 | 25.0 | 17.6 | 0.63 | 1.16 | 145 |
| 370 | A-107 | 5 | 95 | | | 4.5 | 0.3 | 0.27 | 1.0 | 105 | 25.1 | 21.4 | 0.77 | 1.42 | 150 |
| 371 | A-108 | 5 | 95 | | | 4.5 | 0.3 | 0.27 | 1.0 | 105 | 25.0 | 20.7 | 0.75 | 1.37 | 150 |
| 372 | A-115 | 5 | 95 | | | 4.5 | 0.3 | 0.27 | 1.0 | 105 | 24.9 | 21.3 | 0.77 | 1.41 | 146 |
| 373 | A-116 | 5 | 95 | | | 4.5 | 0.3 | 0.27 | 1.0 | 105 | 24.9 | 21.0 | 0.76 | 1.39 | 146 |
| 374 | A-118 | 5 | 95 | | | 4.5 | 0.3 | 0.27 | 1.0 | 105 | 25.2 | 22.6 | 0.82 | 1.50 | 146 |
| 375 | A-119 | 5 | 95 | | | 4.5 | 0.3 | 0.27 | 1.0 | 105 | 25.1 | 22.1 | 0.80 | 1.46 | 151 |
| 376 | A-120 | 5 | 95 | | | 4.5 | 0.3 | 0.27 | 1.0 | 105 | 25.6 | 22.2 | 0.80 | 1.47 | 148 |
| 377 | A-123 | 5 | 95 | | | 4.5 | 0.3 | 0.27 | 1.0 | 105 | 25.1 | 18.7 | 0.67 | 1.23 | 150 |
| 378 | A-124 | 5 | 95 | | | 4.5 | 0.3 | 0.27 | 1.0 | 105 | 24.8 | 18.5 | 0.66 | 1.21 | 150 |
| 379 | A-127 | 5 | 95 | | | 4.5 | 0.3 | 0.27 | 1.0 | 105 | 25.4 | 18.6 | 0.67 | 1.23 | 149 |
| 380 | A-128 | 5 | 95 | | | 4.5 | 0.3 | 0.27 | 1.0 | 105 | 25.6 | 18.4 | 0.66 | 1.21 | 148 |
| 381 | A-129 | 5 | 95 | | | 4.5 | 0.3 | 0.27 | 1.0 | 105 | 24.9 | 18.1 | 0.65 | 1.19 | 146 |
| 382 | A-130 | 5 | 95 | | | 4.5 | 0.3 | 0.27 | 1.0 | 105 | 25.5 | 18.1 | 0.65 | 1.19 | 146 |
| 383 | A-131 | 5 | 95 | | | 4.5 | 0.3 | 0.27 | 1.0 | 105 | 24.8 | 18.0 | 0.65 | 1.18 | 147 |
| 384 | A-132 | 5 | 95 | | | 4.5 | 0.3 | 0.27 | 1.0 | 105 | 25.0 | 18.0 | 1 0.65 | 1.18 | 152 |

| Comparative Example | | | | | | | | | | | | | | | |
|---|---|---|---|---|---|---|---|---|---|---|---|---|---|---|---|
| 6 | - | - | 100 | - | - | 4.5 | 0.3 | 0.27 | 1.0 | 105 | 24.9 | 16.0 | 0.60 | 1.10 | 144 |
| 9 | - | - | 80 | 20 | - | 4.5 | 0.3 | 0.27 | 1.0 | 105 | 25.2 | 16.1 | 0.61 | 1.11 | 146 |
| 10 | - | - | 80 | - | 20 | 4.5 | 0.3 | 0.27 | 1.0 | 105 | 25.4 | 15.8 | 0.58 | 1.08 | 142 |

**[Table 17]**

| Example | Strength-improving agent | Mixing formulation (Parts by weight) | | | | | | | | | | | Physical properties of foam | | | | |
|---|---|---|---|---|---|---|---|---|---|---|---|---|---|---|---|---|---|
| | | Polyol component | | | | | | Foaming agent | Catalyst | | Foam stabilizer -1 | Isocyanate D-1 INDEX | Core density | 25%ILD | Tear strength | Tensile strength | Elongation |
| | Product No. | Strength-improving agent | H-1 | H-2 | H-3 | H-4 | H-5 | Water | Catalyst -1 | Catalyst-2 | | | kg/m³ | kgf/ 314 m² | kgf/cm | kgf/cm² | % |
| 385* | B-1 | 100 | - | - | - | - | - | 4.5 | 0.3 | 0.27 | 1.0 | 105 | 25.4 | 19.0 | 0. 68 | 1.25 | 144 |
| 386* | B-2 | 95 | - | - | - | - | 5 | 4.5 | 0.3 | 0.27 | 1.0 | 105 | 25.5 | 20.0 | 0.72 | 1.32 | 149 |
| 387* | B-3 | 90 | - | - | - | - | 10 | 4.5 | 0.3 | 0.27 | 1.0 | 105 | 25.2 | 20.7 | 0.75 | 1.37 | 150 |
| 388 | B-4 | 60 | - | - | - | - | 40 | 4.5 | 0.3 | 0.27 | 1.0 | 105 | 25.4 | 21.8 | 0.79 | 1.44 | 147 |
| 389* | B-5 | 100 | - | - | - | - | - | 4.5 | 0.3 | 0.27 | 1.0 | 105 | 25.6 | 19.0 | 0. 68 | 1.25 | 151 |
| 390* | B-6 | 95 | - | - | - | - | 5 | 4.5 | 0.3 | 0.27 | 1.0 | 105 | 25.2 | 20.0 | 0.72 | 1.32 | 150 |
| 391* | B-7 | 90 | - | - | - | - | 10 | 4.5 | 0.3 | 0.27 | 1.0 | 105 | 25.0 | 20.7 | 0.75 | 1.37 | 147 |
| 392 | B-8 | 60 | - | - | - | - | 40 | 4.5 | 0.3 | 0.27 | 1.0 | 105 | 24.9 | 21.8 | 0.79 | 1.44 | 145 |
| 393 | B-13 | 80 | - | - | - | - | 20 | 4.5 | 0.3 | 0.27 | 1.0 | 105 | 25.1 | 20.2 | 0.73 | 1.34 | 148 |
| 394 | B-14 | 65 | - | - | - | - | 35 | 4.5 | 0.3 | 0.27 | 1.0 | 105 | 25.5 | 21.3 | 0.77 | 1.41 | 148 |
| 395 | B-15 | 45 | - | - | - | - | 55 | 4.5 | 0.3 | 0.27 | 1.0 | 105 | 25.1 | 21.8 | 0.79 | 1.44 | 144 |
| 396 | B-17 | 80 | - | - | - | - | 20 | 4.5 | 0.3 | 0.27 | 1.0 | 105 | 24.8 | 20.2 | 0.73 | 1.34 | 152 |
| 397 | B-18 | 65 | - | - | - | - | 35 | 4.5 | 0.3 | 0.27 | 1.0 | 105 | 25.0 | 21.3 | 0.77 | 1.41 | 144 |
| 398 | B-19 | 45 | - | - | - | - | 55 | 4.5 | 0.3 | 0.27 | 1.0 | 105 | 25.1 | 21.8 | 0.79 | 1.44 | 144 |
| 399* | B-25 | 100 | - | - | - | - | - | 4.5 | 0.3 | 0.27 | 1.0 | 105 | 25.4 | 20.2 | 0.73 | 1.33 | 152 |
| 400* | B-26 | 95 | - | 5 | - | - | - | 4.5 | 0.3 | 0.27 | 1.0 | 105 | 25.6 | 21.5 | 0.77 | 1.42 | 146 |
| 401* | B-27 | 90 | - | 10 | - | - | - | 4.5 | 0.3 | 0.27 | 1.0 | 105 | 25.2 | 22.4 | 0.81 | 1.49 | 149 |
| 402* | B-28 | 100 | - | - | - | - | - | 4.5 | 0.3 | 0.27 | 1.0 | 105 | 24.8 | 20.2 | 0.73 | 1.33 | 150 |
| 403* | B-29 | 95 | - | 5 | - | - | - | 4.5 | 0.3 | 0.27 | 1.0 | 105 | 24.9 | 21.5 | 0.77 | 1.42 | 149 |
| 404* | B-30 | 90 | - | 10 | - | - | - | 4.5 | 0.3 | 0.27 | 1.0 | 105 | 25.0 | 22.4 | 0.81 | 1.49 | 146 |
| 405* | B-34 | 98 | - | 2 | - | - | - | 4.5 | 0.3 | 0.27 | 1.0 | 105 | 25.2 | 17.7 | 0. 64 | 1.16 | 152 |
| 406* | B-35 | 95 | - | 5 | - | - | - | 4.5 | 0.3 | 0.27 | 1.0 | 105 | 25.1 | 19.1 | 0. 68 | 1.25 | 148 |
| 407* | B-36 | 90 | - | 10 | - | - | - | 4.5 | 0.3 | 0.27 | 1.0 | 105 | 25.5 | 20.0 | 0.72 | 1.32 | 151 |
| 408* | B-37 | 100 | - | - | - | - | - | 4.5 | 0.3 | 0.27 | 1.0 | 105 | 25.3 | 17.8 | 0. 64 | 1.17 | 148 |
| 409* | B-38 | 95 | - | 5 | - | - | - | 4.5 | 0.3 | 0.27 | 1.0 | 105 | 25.5 | 19.1 | 0. 68 | 1.25 | 151 |
| 410* | B-39 | 90 | - | 10 | - | - | - | 4.5 | 0.3 | 0.27 | 1.0 | 105 | 25.2 | 20.0 | 0.72 | 1.32 | 149 |
| 411* | B-43 | 100 | - | - | - | - | - | 4.5 | 0.3 | 0.27 | 1.0 | 105 | 24.8 | 18.6 | 0. 67 | 1.23 | 151 |
| 412* | B-44 | 95 | - | 5 | - | - | - | 4.5 | 0.3 | 0.27 | 1.0 | 105 | 25.5 | 19.9 | 0.72 | 1.32 | 149 |
| 413* | B-45 | 90 | - | 10 | - | - | - | 4.5 | 0.3 | 0.27 | 1.0 | 105 | 25.4 | 20.9 | 0.75 | 1.38 | 150 |
| 414* | B-46 | 100 | - | - | - | - | - | 4.5 | 0.3 | 0.27 | 1.0 | 105 | 25.3 | 18.6 | 0.67 | 1.23 | 149 |
| 415* | B-47 | 95 | - | 5 | - | - | - | 4.5 | 0.3 | 0.27 | 1.0 | 105 | 25.6 | 19.9 | 0.72 | 1.32 | 150 |
| 416* | B-48 | 90 | - | 10 | - | - | - | 4.5 | 0.3 | 0.27 | 1.0 | 105 | 25.4 | 20.9 | 0.75 | 1.38 | 146 |
| 417 | B-52 | 80 | - | - | - | - | 20 | 4.5 | 0.3 | 0.27 | 1.0 | 105 | 25.5 | 19.6 | 0.70 | 1.29 | 151 |
| 418 | B-53 | 65 | - | - | - | - | 35 | 4.5 | 0.3 | 0.27 | 1 | 105 | 25.3 | 20.6 | 0.74 | 1.36 | 145 |
| 419 | B-54 | 50 | - | - | - | - | 50 | 4.5 | 0.3 | 0.27 | 1 | 105 | 25.5 | 21.3 | 0.77 | 1.41 | 144 |
| 420* | B-57 | 85 | - | - | - | - | 15 | 4.5 | 0.3 | 0.27 | 1 | 105 | 25.5 | 19.7 | 0.71 | 1.30 | 147 |
| 421 | B-58 | 65 | - | - | - | - | 35 | 4.5 | 0.3 | 0.27 | 1 | 105 | 25 | 20.6 | 0.74 | 1.36 | 151 |
| 422 | B-59 | 50 | - | - | - | - | 50 | 4.5 | 0.3 | 0.27 | 1 | 105 | 25.3 | 21.3 | 0.77 | 1.41 | 146 |

| | | | | | | | | | | | | | | | | | |
|---|---|---|---|---|---|---|---|---|---|---|---|---|---|---|---|---|---|
| * = not claimed | | | | | | | | | | | | | | | | | |

**[Table 18]**

| Example | Strength-improving agent | Mixing formulation (Parts by weight) | | | | | | | | | | | Physical properties of foam | | | | |
|---|---|---|---|---|---|---|---|---|---|---|---|---|---|---|---|---|---|
| | | Polyol component | | | | | | Foaming agent | Catalyst | | Foam stabilizer -1 | Isocyanate D-1 INDEX | Core density | 25%ILD | Tear strength | Tensile strength | Elongation |
| | Product No. | Strength-improving agent | H-1 | H-2 | H-3 | H-4 | H-5 | Water | Catalyst -1 | Catalyst -2 | | | kg/m³ | kgf/ 314 m² | kgf/cm | kgf/cm² | % |
| 423* | B-67 | 100 | - | - | - | - | - | 4.5 | 0.3 | 0.27 | 1 | 105 | 25.6 | 20.4 | 0.74 | 1.35 | 148 |
| 424* | B-68 | 95 | - | 5 | - | - | - | 4.5 | 0.3 | 0.27 | 1 | 105 | 25.5 | 21.7 | 0.78 | 1.44 | 150 |
| 425* | B-69 | 90 | - | 10 | - | - | - | 4.5 | 0.3 | 0.27 | 1 | 105 | 25.1 | 22.6 | 0.82 | 1.50 | 145 |
| 426* | B-70 | 100 | - | - | - | - | - | 4.5 | 0.3 | 0.27 | 1 | 105 | 25.5 | 20.4 | 0.74 | 1.35 | 148 |
| 427* | B-71 | 95 | - | 5 | - | - | - | 4.5 | 0.3 | 0.27 | 1 | 105 | 24.9 | 21.7 | 0.78 | 1.44 | 151 |
| 428* | B-72 | 90 | - | 10 | - | - | - | 4.5 | 0.3 | 0.27 | 1 | 105 | 25.6 | 22.6 | 0.82 | 1.50 | 144 |
| 429* | B-76 | 100 | - | - | - | - | - | 4.5 | 0.3 | 0.27 | 1 | 105 | 25.6 | 19.7 | 0.71 | 1.30 | 146 |
| 430* | B-77 | 95 | - | 5 | - | - | - | 4.5 | 0.3 | 0.27 | 1 | 105 | 25.1 | 21.0 | 0.76 | 1.39 | 149 |
| 431* | B-78 | 90 | - | 10 | - | - | - | 4.5 | 0.3 | 0.27 | 1 | 105 | 24.8 | 21.9 | 0.79 | 1.45 | 150 |
| 432* | B-79 | 100 | - | - | - | - | - | 4.5 | 0.3 | 0.27 | 1 | 105 | 25 | 19.7 | 0.71 | 1.30 | 147 |
| 433* | B-80 | 95 | - | 5 | - | - | - | 4.5 | 0.3 | 0.27 | 1 | 105 | 25.3 | 21.0 | 0.76 | 1.39 | 148 |
| 434* | B-81 | 90 | - | 10 | - | - | - | 4.5 | 0.3 | 0.27 | 1 | 105 | 24.8 | 21.9 | 0.79 | 1.45 | 149 |
| 435* | B-85 | 85 | - | - | - | - | 15 | 4.5 | 0.3 | 0.27 | 1 | 105 | 25.5 | 19.8 | 0.71 | 1.31 | 152 |
| 436 | B-86 | 70 | - | - | - | - | 30 | 4.5 | 0.3 | 0.27 | 1 | 105 | 25.3 | 20.9 | 0.75 | 1.38 | 145 |
| 437 | B-87 | 50 | - | - | - | - | 50 | 4.5 | 0.3 | 0.27 | 1 | 105 | 25.1 | 21.4 | 0.77 | 1.42 | 151 |
| 438* | B-89 | 85 | - | - | - | - | 15 | 4.5 | 0.3 | 0.27 | 1 | 105 | 25.5 | 19.8 | 0.71 | 1.31 | 151 |
| 439 | B-90 | 70 | - | - | - | - | 30 | 4.5 | 0.3 | 0.27 | 1 | 105 | 25.4 | 20.9 | 0.75 | 1.38 | 144 |
| 440 | B-91 | 50 | - | - | - | - | 50 | 4.5 | 0.3 | 0.27 | 1 | 105 | 24.8 | 21.4 | 0.77 | 1.42 | 146 |
| 441* | B-97 | 100 | - | - | - | - | - | 4.5 | 0.3 | 0.27 | 1 | 105 | 25.2 | 19.5 | 0.70 | 1.29 | 146 |
| 442* | B-98 | 95 | - | 5 | - | - | - | 4.5 | 0.3 | 0.27 | 1 | 105 | 25.2 | 20.6 | 0.74 | 1.36 | 146 |
| 443* | B-99 | 90 | - | 10 | - | - | - | 4.5 | 0.3 | 0.27 | 1 | 105 | 25.6 | 21.4 | 0.77 | 1.42 | 150 |
| 444* | B-100 | 100 | - | - | - | - | - | 4.5 | 0.3 | 0.27 | 1 | 105 | 25 | 19.5 | 0.70 | 1.29 | 148 |
| 445* | B-101 | 95 | - | 5 | - | - | - | 4.5 | 0.3 | 0.27 | 1 | 105 | 24.9 | 20.6 | 0.74 | 1.36 | 146 |
| 446* | B-102 | 90 | - | 10 | - | - | - | 4.5 | 0.3 | 0.27 | 1 | 105 | 25.6 | 21.4 | 0.77 | 1.42 | 149 |

| Comparative Example | | | | | | | | | | | | | | | | | |
|---|---|---|---|---|---|---|---|---|---|---|---|---|---|---|---|---|---|
| 6 | - | - | 100 | - | - | - | - | 4.5 | 0.3 | 0.27 | 1 | 105 | 24.9 | 16 | 0.6 | 1.1 | 144 |
| 9 | - | - | 80 | - | 20 | - | - | 4.5 | 0.3 | 0.27 | 1 | 105 | 25.2 | 16.1 | 0.61 | 1.11 | 146 |
| 10 | - | - | 80 | - | - | 20 | - | 4.5 | 0.3 | 0.27 | 1 | 105 | 25.4 | 15.8 | 0.58 | 1.08 | 142 |

| | | | | | | | | | | | | | | | | | |
|---|---|---|---|---|---|---|---|---|---|---|---|---|---|---|---|---|---|
| * = not claimed | | | | | | | | | | | | | | | | | |

In Table 13 to Table 18, the urethane foams of Examples 269 to 446 of the present invention are improved in physical properties of the foam, particularly hardness, tensile strength, and tear strength of the foam as compared with the urethane foams of Comparative Examples 6 to 10 obtained by a conventional technique.

### <Examples 447 to 558 and Comparative Examples 11 to 14 Production of Soft HR Foams>

In accordance with the foaming formulations shown in Table 19 to Table 22, soft polyurethane foams were foamed in a mold to form foams under the following foaming conditions, and then the thus obtained foams were removed from the mold and left to stand one day and night, followed by the measurement of various physical properties of the soft polyurethane foams. The measured values of physical properties are also shown in Table 19 to Table 22, respectively.

### (Foaming Conditions)

Mold SIZE: 40 cm × 40 cm × 10 cm (in height)
Mold temperature: 65°C
Mold material: Aluminum
Mixing method: High-pressure urethane foaming machine (manufactured by Polymer Engineering Co., LTD.)
A polyol premix was mixed with an isocyanate under 15 MPa.

As raw materials of soft polyurethane foams in Examples 447 to 558 and Comparative Examples 11 to 14, the same raw materials as those exemplified in the above-mentioned Examples and Comparative Examples were used, and other materials are as follows.

### 1. Catalyst

Catalyst-3: "TOYOCAT ET" manufactured by TOSOH CORPORATION (a 70% by weight dipropylene glycol solution of bis(dimethylaminoethyl)ether)

### 2. Foam Stabilizer

Foam Stabilizer-2: "TEGOSTAB B8737LF" manufactured by EVONIK

### 3. Organic Isocyanate Component (D-2)

"CE-729" manufactured by Nippon Polyurethane Industry Co., Ltd. (TDI-80 (a ratio of 2,4- and 2,6-TDI, 2,4-form is 80%/crude MDI (average number of functional groups: 2.9) = 80/20 (weight ratio))

### 4. Polyol

(1) Polymer polyol (P-1) : A polymer polyol (having the content of polymer of 30%) obtained by copolymerizing styrene with acrylonitrile (weight ratio: 30/70) in a polyoxyethylene-polyoxypropylene polyol having an average number of functional groups of 3.0 and a hydroxyl value of 34, the total of EO unit = 14%, obtained by block addition of PO and EO to glycerin. Hydroxyl value is 24.
(2) Polyol (P-2): A polyoxyethylene-polyoxypropylene polyol having an average number of functional groups of 3.0 and a hydroxyl value of 24, the total of EO unit = 72%, obtained by random addition of PO and EO to glycerin.
(3) Polyol (P-3): A polyoxypropylene polyol having an average number of functional groups OF 6.0 and a hydroxyl value of 490 obtained by addition of PO to sorbitol.
(4) Polyol (P-4) : Glycerin having a number of functional groups of 3.0 and a hydroxyl value of 1829.
(5) Polyol (P-5): A polyoxyethylene-polyoxypropylene polyol having an average number of functional groups of 4.0 and a hydroxyl value of 28, the total of EO unit = 14%, obtained by block addition of PO and EO to pentaerythritol.
(6) Polyol (P-6): A polyoxyethylene-polyoxypropylene polyol having an average number of functional groups of 3.0 and a hydroxyl value of 33, the total of EO unit = 14%, obtained by block addition of PO and EO to glycerin.

Methods for measurement of the respective items are as follows. The obtained results are shown in Table 19 to Table 22.
- Methods for measurement of physical properties of the foam, and units are shown below.
   Core density: measured in accordance with JIS K6400, unit is kg/m³
   Elongation rate: measured in accordance with JIS K6400, unit is %
   Tensile strength: measured in accordance with JIS K6400, unit is kgf/cm²
   Hardness (25%-ILD) : measured in accordance with JIS K6400, unit is N/314 cm²
   Tear strength: measured in accordance with JIS K6400, unit is kgf/cm

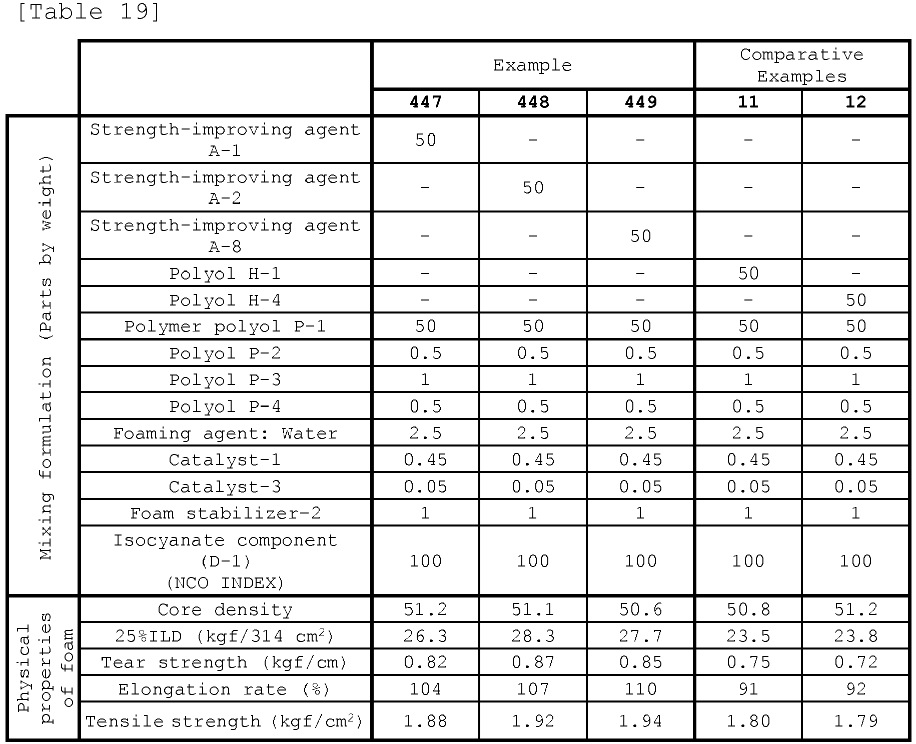

**[Table 20]**

| Example | Strength-improving agent | Mixing formulation (Parts by weight) | | | | | | | | | | | | | Physical properties of foam | | | | |
|---|---|---|---|---|---|---|---|---|---|---|---|---|---|---|---|---|---|---|---|
| | | Polyol component | | | | | | | | Catalyst | | Foam stabilizer -2 | Foaming agent | Isocyanate D-2 INDEX | Core density | 25%ILD | Tear strength | Tensile strength | Elongation |
| | Product No. | Strength-improving agent | P-1 | P-2 | P-3 | P-4 | P-5 | P-6 | H-4 | Catalyst -1 | Catalyst -3 | | Water | | kg/m³ | kgf/ 314 m² | kgf/cm | kgf/cm² | % |
| 450 | A-1 | 2 | 50 | 0.5 | 2 | 0.5 | 30 | 20 | - | 0.45 | 0.06 | 1.0 | 2.4 | 100 | 32.3 | 34.8 | 2.04 | 0.85 | 109 |
| 451 | A-1 | 5 | 50 | 0.5 | 2 | 0.5 | 30 | 20 | - | 0.45 | 0.06 | 1.0 | 2.4 | 100 | 32.8 | 35.3 | 2.09 | 0.86 | 107 |
| 452 | A-1 | 20 | 30 | 0.5 | 2 | 0.5 | 30 | 20 | - | 0.45 | 0.06 | 1.0 | 2.4 | 100 | 33.0 | 39.7 | 2.36 | 0.97 | 105 |
| 453 | A-1 | 50 | 0 | 0.5 | 2 | 0.5 | 30 | 20 | - | 0.45 | 0.06 | 1.0 | 2.4 | 100 | 32.4 | 42.4 | 2.53 | 1.04 | 110 |
| 454 | A-2 | 5 | 50 | 0.5 | 2 | 0.5 | 30 | 20 | - | 0.45 | 0.06 | 1.0 | 2.4 | 100 | 32.9 | 36.7 | 2.17 | 0.89 | 107 |
| 455 | A-3 | 5 | 50 | 0.5 | 2 | 0.5 | 30 | 20 | - | 0.45 | 0.06 | 1.0 | 2.4 | 100 | 32.8 | 37.9 | 2.25 | 0.92 | 106 |
| 456 | A-4 | 5 | 50 | 0.5 | 2 | 0.5 | 30 | 20 | - | 0.45 | 0.06 | 1.0 | 2.4 | 100 | 32.8 | 40.4 | 2.41 | 0.99 | 107 |
| 457 | A-5 | 5 | 50 | 0.5 | 2 | 0.5 | 30 | 20 | - | 0.45 | 0.06 | 1.0 | 2.4 | 100 | 32.1 | 40.0 | 2.38 | 0.98 | 105 |
| 458 | A-6 | 5 | 50 | 0.5 | 2 | 0.5 | 30 | 20 | - | 0.45 | 0.06 | 1.0 | 2.4 | 100 | 32.5 | 39.8 | 2.36 | 0.97 | 112 |
| 459 | A-7 | 5 | 50 | 0.5 | 2 | 0.5 | 30 | 20 | - | 0.45 | 0.06 | 1.0 | 2.4 | 100 | 32.8 | 40.0 | 2.38 | 0.98 | 111 |
| 460 | A-8 | 5 | 50 | 0.5 | 2 | 0.5 | 30 | 20 | - | 0.45 | 0.06 | 1.0 | 2.4 | 100 | 33.1 | 36.1 | 2.13 | 0.88 | 105 |
| 461 | A-10 | 5 | 50 | 0.5 | 2 | 0.5 | 30 | 20 | - | 0.45 | 0.06 | 1.0 | 2.4 | 100 | 32.5 | 42.9 | 2.56 | 1.05 | 111 |
| 462 | A-16 | 5 | 50 | 0.5 | 2 | 0.5 | 30 | 20 | - | 0.45 | 0.06 | 1.0 | 2.4 | 100 | 32.9 | 41.6 | 2.48 | 1.02 | 113 |
| 463 | A-17 | 5 | 50 | 0.5 | 2 | 0.5 | 30 | 20 | - | 0.45 | 0.06 | 1.0 | 2.4 | 100 | 32.2 | 41.1 | 2.45 | 1.00 | 105 |
| 464 | A-18 | 5 | 50 | 0.5 | 2 | 0.5 | 30 | 20 | - | 0.45 | 0.06 | 1.0 | 2.4 | 100 | 32.8 | 35.6 | 2.10 | 0.86 | 104 |
| 465 | A-19 | 5 | 50 | 0.5 | 2 | 0.5 | 30 | 20 | - | 0.45 | 0.06 | 1.0 | 2.4 | 100 | 32.9 | 40.6 | 2.41 | 0.99 | 110 |
| 466 | A-21 | 5 | 50 | 0.5 | 2 | 0.5 | 30 | 20 | - | 0.45 | 0.06 | 1.0 | 2.4 | 100 | 32.2 | 41.6 | 2.48 | 1.02 | 112 |
| 467 | A-22 | 5 | 50 | 0.5 | 2 | 0.5 | 30 | 20 | - | 0.45 | 0.06 | 1.0 | 2.4 | 100 | 32.6 | 37.4 | 2.22 | 0.91 | 106 |
| 468 | A-24 | 5 | 50 | 0.5 | 2 | 0.5 | 30 | 20 | - | 0.45 | 0.06 | 1.0 | 2.4 | 100 | 33.0 | 37.3 | 2.21 | 0.91 | 104 |
| 469 | A-25 | 5 | 50 | 0.5 | 2 | 0.5 | 30 | 20 | - | 0.45 | 0.06 | 1.0 | 2.4 | 100 | 32.9 | 36.9 | 2.19 | 0.90 | 106 |
| 470 | A-27 | 5 | 50 | 0.5 | 2 | 0.5 | 30 | 20 | - | 0.45 | 0.06 | 1.0 | 2.4 | 100 | 32.7 | 37.5 | 2.22 | 0.91 | 110 |
| 471 | A-32 | 5 | 50 | 0.5 | 2 | 0.5 | 30 | 20 | - | 0.45 | 0.06 | 1.0 | 2.4 | 100 | 32.2 | 37.6 | 2.23 | 0.92 | 104 |
| 472 | A-33 | 5 | 50 | 0.5 | 2 | 0.5 | 30 | 20 | - | 0.45 | 0.06 | 1.0 | 2.4 | 100 | 32.8 | 38.9 | 2.60 | 1.07 | 111 |
| 473 | A-34 | 5 | 50 | 0.5 | 2 | 0.5 | 30 | 20 | - | 0.45 | 0.06 | 1.0 | 2.4 | 100 | 32.2 | 36.5 | 2.30 | 0.94 | 109 |
| 474 | A-35 | 5 | 50 | 0.5 | 2 | 0.5 | 30 | 20 | - | 0.45 | 0.06 | 1.0 | 2.4 | 100 | 32.5 | 38.6 | 2.56 | 1.05 | 105 |
| 475 | A-36 | 5 | 50 | 0.5 | 2 | 0.5 | 30 | 20 | - | 0.45 | 0.06 | 1.0 | 2.4 | 100 | 32.1 | 37.4 | 2.41 | 0.99 | 108 |
| 476 | A-41 | 5 | 50 | 0.5 | 2 | 0.5 | 30 | 20 | - | 0.45 | 0.06 | 1.0 | 2.4 | 100 | 32.4 | 37.7 | 2.24 | 0.92 | 111 |
| 477 | A-42 | 5 | 50 | 0.5 | 2 | 0.5 | 30 | 20 | - | 0.45 | 0.06 | 1.0 | 2.4 | 100 | 33.1 | 40.4 | 2.40 | 0.99 | 111 |
| 478 | A-43 | 5 | 50 | 0.5 | 2 | 0.5 | 30 | 20 | - | 0.45 | 0.06 | 1.0 | 2.4 | 100 | 33.0 | 39.8 | 2.71 | 1.11 | 109 |
| 479 | A-44 | 5 | 50 | 0.5 | 2 | 0.5 | 30 | 20 | - | 0.45 | 0.06 | 1.0 | 2.4 | 100 | 32.7 | 37.5 | 2.43 | 1.00 | 112 |
| 480 | A-46 | 5 | 50 | 0.5 | 2 | 0.5 | 30 | 20 | - | 0.45 | 0.06 | 1.0 | 2.4 | 100 | 33.0 | 42.5 | 2.53 | 1.04 | 104 |
| 481 | A-47 | 5 | 50 | 0.5 | 2 | 0.5 | 30 | 20 | - | 0.45 | 0.06 | 1 | 2.4 | 100 | 32.3 | 42.2 | 2.51 | 1.03 | 111 |
| 482 | A-48 | 5 | 50 | 0.5 | 2 | 0.5 | 30 | 20 | - | 0.45 | 0.06 | 1 | 2.4 | 100 | 32.8 | 37.6 | 2.23 | 0.92 | 111 |
| 483 | A-50 | 5 | 50 | 0.5 | 2 | 0.5 | 30 | 20 | - | 0.45 | 0.06 | 1 | 2.4 | 100 | 32.5 | 44.0 | 2.62 | 1.08 | 112 |
| 484 | A-51 | 5 | 50 | 0.5 | 2 | 0.5 | 30 | 20 | - | 0.45 | 0.06 | 1 | 2.4 | 100 | 32.3 | 44.1 | 2.63 | 1.08 | 111 |
| 485 | A-53 | 5 | 50 | 0.5 | 2 | 0.5 | 30 | 20 | - | 0.45 | 0.06 | 1 | 2.4 | 100 | 32.3 | 36.0 | 2.13 | 0.87 | 111 |
| 486 | A-54 | 5 | 50 | 0.5 | 2 | 0.5 | 30 | 20 | - | 0.45 | 0.06 | 1 | 2.4 | 100 | 32.7 | 36.0 | 2.25 | 0.92 | 104 |
| 487 | A-55 | 5 | 50 | 0.5 | 2 | 0.5 | 30 | 20 | - | 0.45 | 0.06 | 1 | 2.4 | 100 | 32.5 | 35.1 | 2.13 | 0.88 | 106 |
| 488 | A-57 | 5 | 50 | 0.5 | 2 | 0.5 | 30 | 20 | - | 0.45 | 0.06 | 1 | 2.4 | 100 | 32.1 | 36.0 | 2.13 | 0.87 | 107 |
| 489 | A-58 | 5 | 50 | 0.5 | 2 | 0.5 | 30 | 20 | - | 0.45 | 0.06 | 1 | 2.4 | 100 | 32.4 | 36.0 | 2.24 | 0.92 | 108 |
| 490 | A-59 | 5 | 50 | 0.5 | 2 | 0.5 | 30 | 20 | - | 0.45 | 0.06 | 1 | 2.4 | 100 | 32.4 | 35.1 | 2.13 | 0.87 | 112 |

**[Table 21]**

| Example | Strength-improving agent | Mixing formulation (Parts by weight) | | | | | | | | | | | | | Physical properties of foam | | | | |
|---|---|---|---|---|---|---|---|---|---|---|---|---|---|---|---|---|---|---|---|
| | | Polyol component | | | | | | | | Catalyst | | Foam stabilize r-2 | Foaming agent | Isocyanate D-2 INDEX | Core density | 25%ILD | Tear strength | Tensile strength | Elongation |
| | Product No. | Strength-improving agent | P-1 | P-2 | P-3 | P-4 | P-5 | P-6 | H-4 | Catalyst-1 | Catalyst -3 | | Water | | kg/m³ | kgf/ 314 m² | kgf/cm | kgf/cm² | % |
| 491 | A-61 | 5 | 50 | 0.5 | 2 | 0.5 | 30 | 20 | - | 0.45 | 0.06 | 1 | 2.4 | 100 | 32.5 | 39.0 | 2.61 | 1.07 | 110 |
| 492 | A-63 | 5 | 50 | 0.5 | 2 | 0.5 | 30 | 20 | - | 0.45 | 0.06 | 1 | 2.4 | 100 | 32.5 | 39.7 | 2.70 | 1.11 | 112 |
| 493 | A-65 | 5 | 50 | 0.5 | 2 | 0.5 | 30 | 20 | - | 0.45 | 0.06 | 1 | 2.4 | 100 | 32.9 | 38.9 | 2.59 | 1.07 | 109 |
| 494 | A-67 | 5 | 50 | 0.5 | 2 | 0.5 | 30 | 20 | - | 0.45 | 0.06 | 1 | 2.4 | 100 | 33 | 39.6 | 2.68 | 1.10 | 113 |
| 495 | A-70 | 5 | 50 | 0.5 | 2 | 0.5 | 30 | 20 | - | 0.45 | 0.06 | 1 | 2.4 | 100 | 32.4 | 38.8 | 2.58 | 1.06 | 109 |
| 496 | A-71 | 5 | 50 | 0.5 | 2 | 0.5 | 30 | 20 | - | 0.45 | 0.06 | 1 | 2.4 | 100 | 32.3 | 37.2 | 2.39 | 0.98 | 112 |
| 497 | A-73 | 5 | 50 | 0.5 | 2 | 0.5 | 30 | 20 | - | 0.45 | 0.06 | 1 | 2.4 | 100 | 32.3 | 39.5 | 2.67 | 1.10 | 108 |
| 498 | A-75 | 5 | 50 | 0.5 | 2 | 0.5 | 30 | 20 | - | 0.45 | 0.06 | 1 | 2.4 | 100 | 32.8 | 38.9 | 2.59 | 1.07 | 109 |
| 499 | A-77 | 5 | 50 | 0.5 | 2 | 0.5 | 30 | 20 | - | 0.45 | 0.06 | 1 | 2.4 | 100 | 33.1 | 39.6 | 2.68 | 1.10 | 109 |
| 500 | A-79 | 5 | 50 | 0.5 | 2 | 0.5 | 30 | 20 | - | 0.45 | 0.06 | 1 | 2.4 | 100 | 32.6 | 38.8 | 2.59 | 1.06 | 104 |
| 501 | A-81 | 5 | 50 | 0.5 | 2 | 0.5 | 30 | 20 | - | 0.45 | 0.06 | 1 | 2.4 | 100 | 32.7 | 39.5 | 2.68 | 1.10 | 107 |
| 502 | A-82 | 5 | 50 | 0.5 | 2 | 0.5 | 30 | 20 | - | 0.45 | 0.06 | 1 | 2.4 | 100 | 32.4 | 39.2 | 2.63 | 1.08 | 106 |
| 503 | A-83 | 5 | 50 | 0.5 | 2 | 0.5 | 30 | 20 | - | 0.45 | 0.06 | 1 | 2.4 | 100 | 32.1 | 38.4 | 2.54 | 1.04 | 108 |
| 504 | A-84 | 5 | 50 | 0.5 | 2 | 0.5 | 30 | 20 | - | 0.45 | 0.06 | 1 | 2.4 | 100 | 32.8 | 38.7 | 2.58 | 1.06 | 112 |
| 505 | A-85 | 5 | 50 | 0.5 | 2 | 0.5 | 30 | 20 | - | 0.45 | 0.06 | 1 | 2.4 | 100 | 32.6 | 38.8 | 2.59 | 1.06 | 103 |
| 506 | A-90 | 5 | 50 | 0.5 | 2 | 0.5 | 30 | 20 | - | 0.45 | 0.06 | 1 | 2.4 | 100 | 32.8 | 38.1 | 2.50 | 1.03 | 110 |
| 507 | A-91 | 5 | 50 | 0.5 | 2 | 0.5 | 30 | 20 | - | 0.45 | 0.06 | 1 | 2.4 | 100 | 32.1 | 37.8 | 2.46 | 1.01 | 106 |
| 508 | A-92 | 5 | 50 | 0.5 | 2 | 0.5 | 30 | 20 | - | 0.45 | 0.06 | 1 | 2.4 | 100 | 32.7 | 35.6 | 2.11 | 0.87 | 104 |
| 509 | A-93 | 5 | 50 | 0.5 | 2 | 0.5 | 30 | 20 | - | 0.45 | 0.06 | 1 | 2.4 | 100 | 32.9 | 37.5 | 2.43 | 1.00 | 113 |
| 510 | A-95 | 5 | 50 | 0.5 | 2 | 0.5 | 30 | 20 | - | 0.45 | 0.06 | 1 | 2.4 | 100 | 32.3 | 38.1 | 2.50 | 1.03 | 111 |
| 511 | A-96 | 5 | 50 | 0.5 | 2 | 0.5 | 30 | 20 | - | 0.45 | 0.06 | 1 | 2.4 | 100 | 32.1 | 37.5 | 2.22 | 0.91 | 105 |
| 512 | A-99 | 5 | 50 | 0.5 | 2 | 0.5 | 30 | 20 | - | 0.45 | 0.06 | 1 | 2.4 | 100 | 32.8 | 37.0 | 2.19 | 0.90 | 110 |
| 513 | A-100 | 5 | 50 | 0.5 | 2 | 0.5 | 30 | 20 | - | 0.45 | 0.06 | 1 | 2.4 | 100 | 32.1 | 41.5 | 2.47 | 1.01 | 107 |
| 514 | A-107 | 5 | 50 | 0.5 | 2 | 0.5 | 30 | 20 | - | 0.45 | 0.06 | 1 | 2.4 | 100 | 32.3 | 38.8 | 2.59 | 1.06 | 113 |
| 515 | A-108 | 5 | 50 | 0.5 | 2 | 0.5 | 30 | 20 | - | 0.45 | 0.06 | 1 | 2.4 | 100 | 32.7 | 38.1 | 2.50 | 1.03 | 112 |
| 510 | A-115 | 5 | 50 | 0.5 | 2 | 0.5 | 30 | 20 | - | 0.45 | 0.06 | 1 | 2.4 | 100 | 32.4 | 38.7 | 2.57 | 1.06 | 105 |
| 517 | A-116 | 5 | 50 | 0.5 | 2 | 0.5 | 30 | 20 | - | 0.45 | 0.06 | 1 | 2.4 | 100 | 32.7 | 38.4 | 2.53 | 1.04 | 111 |
| 518 | A-117 | 5 | 50 | 0.5 | 2 | 0.5 | 30 | 20 | - | 0.45 | 0.06 | 1 | 2.4 | 100 | 32.7 | 36.5 | 2.16 | 0.89 | 107 |
| 519 | A-118 | 5 | 50 | 0.5 | 2 | 0.5 | 30 | 20 | - | 0.45 | 0.06 | 1 | 2.4 | 100 | 32.3 | 40.0 | 2.74 | 1.13 | 113 |
| 520 | A-119 | 5 | 50 | 0.5 | 2 | 0.5 | 30 | 20 | - | 0.45 | 0.06 | 1 | 2.4 | 100 | 32.9 | 39.5 | 2.67 | 1.10 | 107 |
| 521 | A-120 | 5 | 50 | 0.5 | 2 | 0.5 | 30 | 20 | - | 0.45 | 0.06 | 1 | 2.4 | 100 | 32.7 | 39.6 | 2.68 | 1.10 | 110 |
| 522 | A-123 | 5 | 50 | 0.5 | 2 | 0.5 | 30 | 20 | - | 0.45 | 0.06 | 1 | 2.4 | 100 | 32.1 | 36.1 | 2.26 | 0.93 | 112 |
| 523 | A-124 | 5 | 50 | 0.5 | 2 | 0.5 | 30 | 20 | - | 0.45 | 0.06 | 1 | 2.4 | 100 | 32.5 | 35.9 | 2.22 | 0.91 | 109 |
| 524 | A-127 | 5 | 50 | 0.5 | 2 | 0.5 | 30 | 20 | - | 0.45 | 0.06 | 1 | 2.4 | 100 | 33 | 36.1 | 2.25 | 0.92 | 112 |
| 525 | A-128 | 5 | 50 | 0.5 | 2 | 0.5 | 30 | 20 | - | 0.45 | 0.06 | 1 | 2.4 | 100 | 32.1 | 35.8 | 2.22 | 0.91 | 109 |
| 526 | A-131 | 5 | 50 | 0.5 | 2 | 0.5 | 30 | 20 | - | 0.45 | 0.06 | 1 | 2.4 | 100 | 33.1 | 35.4 | 2.17 | 0.89 | 111 |
| 527 | A-132 | 5 | 50 | 0.5 | 2 | 0.5 | 30 | 20 | - | 0.45 | 0.06 | 1 | 2.4 | 100 | 32.4 | 35.4 | 2.17 | 0.89 | 109 |

| Comparative Example | | | | | | | | | | | | | | | | | | | |
|---|---|---|---|---|---|---|---|---|---|---|---|---|---|---|---|---|---|---|---|
| 13 | - | - | 50 | 0.5 | 2 | 0.5 | 30 | 20 | - | 0.45 | 0.06 | 1 | 2.4 | 100 | 32.6 | 32.6 | 2.02 | 0.83 | 98 |
| 14 | - | - | 50 | 0.5 | 2 | 0.5 | 27 | 18 | 5 | 0.45 | 0.06 | 1 | 2.4 | 100 | 32.4 | 31.8 | 2 | 0.81 | 100 |

**[Table 22]**

| Example | Polyol composition | Mixing formulation (Parts by weight) | | | | | | | | | | | | | Physical properties of foam | | | | |
|---|---|---|---|---|---|---|---|---|---|---|---|---|---|---|---|---|---|---|---|
| | | Polyol component | | | | | | | | Catalyst | | Foam stabilizer -2 | Foaming agent | Isocyanate D-2 INDEX | Core density | 25%ILD | Tear strength | Tensile strength | Elongation |
| | | Polyol composition | P-1 | P-2 | P-3 | P-4 | P-5 | P-6 | H-4 | Catalyst -1 | Catalyst -3 | | Water | | kg/m³ | kgf/ 314 m² | kgf/cm | kgf/atf | % |
| 528 | B-106 | 20 | 50 | 0.5 | 2 | 0.5 | 30 | 0 | 0 | 0.45 | 0.06 | 1 | 2.4 | 100 | 32.8 | 35.0 | 0.85 | 2.07 | 112 |
| 529 | B-107 | 20 | 50 | 0.5 | 2 | 0.5 | 30 | 0 | 0 | 0.45 | 0.06 | 1 | 2.4 | 100 | 32.8 | 37.0 | 0.90 | 2.19 | 109 |
| 530 | B-108 | 20 | 50 | 0.5 | 2 | 0.5 | 30 | 0 | 0 | 0.45 | 0.06 | 1 | 2.4 | 100 | 32.8 | 38.6 | 0.94 | 2.29 | 107 |
| 531 | B-109 | 15 | 50 | 0.5 | 2 | 0.5 | 35 | 0 | 0 | 0.45 | 0.06 | 1 | 2.4 | 100 | 32.4 | 41.1 | 1.01 | 2.45 | 105 |
| 532 | B-110 | 20 | 50 | 0.5 | 2 | 0.5 | 30 | 0 | 0 | 0.45 | 0.06 | 1 | 2.4 | 100 | 33 | 36.9 | 0.90 | 2.19 | 108 |
| 533 | B-111 | 20 | 50 | 0.5 | 2 | 0.5 | 30 | 0 | 0 | 0.45 | 0.06 | 1 | 2.4 | 100 | 32.6 | 39.7 | 0.97 | 2.36 | 108 |
| 534 | B-112 | 15 | 50 | 0.5 | 2 | 0.5 | 35 | 0 | 0 | 0.45 | 0.06 | 1 | 2.4 | 100 | 32.3 | 40.9 | 1.00 | 2.44 | 113 |
| 535 | B-113 | 20 | 50 | 0.5 | 2 | 0.5 | 30 | 0 | 0 | 0.45 | 0.06 | 1 | 2.4 | 100 | 32.7 | 35.2 | 0.88 | 2.14 | 107 |
| 536 | B-114 | 20 | 50 | 0.5 | 2 | 0.5 | 30 | 0 | 0 | 0.45 | 0.06 | 1 | 2.4 | 100 | 32.1 | 36.6 | 0.95 | 2.31 | 108 |
| 537 | B-115 | 20 | 50 | 0.5 | 2 | 0.5 | 30 | 0 | 0 | 0.45 | 0.06 | 1 | 2.4 | 100 | 32.1 | 37.6 | 1.00 | 2.44 | 108 |
| 538 | B-116 | 20 | 50 | 0.5 | 2 | 0.5 | 30 | 0 | 0 | 0.45 | 0.06 | 1 | 2.4 | 100 | 32.7 | 32.9 | 0.85 | 2.05 | 108 |
| 539 | B-117 | 20 | 50 | 0.5 | 2 | 0.5 | 30 | 0 | 0 | 0.45 | 0.06 | 1 | 2.4 | 100 | 32.4 | 34.1 | 0.86 | 2.06 | 104 |
| 540 | B-118 | 20 | 50 | 0.5 | 2 | 0.5 | 30 | 0 | 0 | 0.45 | 0.06 | 1 | 2.4 | 100 | 32.8 | 35.2 | 0.88 | 2.14 | 113 |
| 541 | B-119 | 20 | 50 | 0.5 | 2 | 0.5 | 30 | 0 | 0 | 0.45 | 0.06 | 1 | 2.4 | 100 | 32.5 | 33.6 | 0.85 | 2.05 | 106 |
| 542 | B-120 | 20 | 50 | 0.5 | 2 | 0.5 | 30 | 0 | 0 | 0.45 | 0.06 | 1 | 2.4 | 100 | 32.2 | 35.0 | 0.87 | 2.12 | 111 |
| 543 | B-121 | 20 | 50 | 0.5 | 2 | 0.5 | 30 | 0 | 0 | 0.45 | 0.06 | 1 | 2.4 | 100 | 32.6 | 36.1 | 0.92 | 2.25 | 106 |
| 544 | B-122 | 20 | 50 | 0.5 | 2 | 0.5 | 30 | 0 | 0 | 0.45 | 0.06 | 1 | 2.4 | 100 | 32.9 | 35.6 | 0.86 | 2.11 | 104 |
| 545 | B-123 | 20 | 50 | 0.5 | 2 | 0.5 | 30 | 0 | 0 | 0.45 | 0.06 | 1 | 2.4 | 100 | 33.1 | 38.4 | 0.94 | 2.28 | 109 |
| 546 | B-124 | 15 | 50 | 0.5 | 2 | 0.5 | 35 | 0 | 0 | 0.45 | 0.06 | 1 | 2.4 | 100 | 32.3 | 39.6 | 0.97 | 2.35 | 108 |
| 547 | B-125 | 20 | 50 | 0.5 | 2 | 0.5 | 30 | 0 | 0 | 0.45 | 0.06 | 1 | 2.4 | 100 | 32.8 | 35.4 | 0.89 | 2.17 | 107 |
| 548 | B-126 | 20 | 50 | 0.5 | 2 | 0.5 | 30 | 0 | 0 | 0.45 | 0.06 | 1 | 2.4 | 100 | 32.9 | 36.8 | 0.96 | 2.34 | 109 |
| 549 | B-127 | 20 | 50 | 0.5 | 2 | 0.5 | 30 | 0 | 0 | 0.45 | 0.06 | 1 | 2.4 | 100 | 32.6 | 37.9 | 1.01 | 2.47 | 106 |
| 550 | B-128 | 20 | 50 | 0.5 | 2 | 0.5 | 30 | 0 | 0 | 0.45 | 0.06 | 1 | 2.4 | 100 | 32.9 | 34.7 | 0.85 | 2.07 | 106 |
| 551 | B-129 | 20 | 50 | 0.5 | 2 | 0.5 | 30 | 0 | 0 | 0.45 | 0.06 | 1 | 2.4 | 100 | 33 | 36.1 | 0.92 | 2.25 | 105 |
| 552 | B-130 | 20 | 50 | 0.5 | 2 | 0.5 | 30 | 0 | 0 | 0.45 | 0.06 | 1 | 2.4 | 100 | 32.1 | 37.1 | 0.98 | 2.38 | 111 |
| 553 | B-131 | 20 | 50 | 0.5 | 2 | 0.5 | 30 | 0 | 0 | 0.45 | 0.06 | 1 | 2.4 | 100 | 32.6 | 35.9 | 0.87 | 2.12 | 111 |
| 554 | B-132 | 20 | 50 | 0.5 | 2 | 0.5 | 30 | 0 | 0 | 0.45 | 0.06 | 1 | 2.4 | 100 | 32.7 | 38.7 | 0.94 | 2.30 | 112 |
| 555 | B-133 | 15 | 50 | 0.5 | 2 | 0.5 | 35 | 0 | 0 | 0.45 | 0.06 | 1 | 2.4 | 100 | 32.3 | 39.9 | 0.98 | 2.37 | 107 |
| 556 | B-134 | 20 | 50 | 0.5 | 2 | 0.5 | 30 | 0 | 0 | 0.45 | 0.06 | 1 | 2.4 | 100 | 32.6 | 34.9 | 0.86 | 2.10 | 104 |
| 557 | B-135 | 20 | 50 | 0.5 | 2 | 0.5 | 30 | 0 | 0 | 0.45 | 0.06 | 1 | 2.4 | 100 | 32.4 | 36.1 | 0.92 | 2.25 | 104 |
| 558 | B-136 | 20 | 50 | 0.5 | 2 | 0.5 | 30 | 0 | 0 | 0.45 | 0.06 | 1 | 2.4 | 100 | 32.4 | 37.0 | 0.97 | 2.36 | 107 |

| Comparative Example | | | | | | | | | | | | | | | | | | | |
|---|---|---|---|---|---|---|---|---|---|---|---|---|---|---|---|---|---|---|---|
| 13 | - | 0 | 50 | 0.5 | 2 | 0.5 | 30 | 20 | 0 | 0.45 | 0.06 | 1 | 2.4 | 100 | 32. 6 | 32. 6 | 0.83 | 2.02 | 98 |
| 14 | - | 0 | 50 | 0.5 | 2 | 0.5 | 27 | 18 | 5 | 0.45 | 0.06 | 1 | 2.4 | 100 | 32.4 | 31.8 | 0.81 | 2.00 | 100 |

In Table 19 to Table 22, the urethane foams of Examples 447 to 558 of the present invention are improved in physical properties, particularly hardness, tensile strength and tear strength of the foam as compared with the urethane foams of Comparative Examples 11 to 14 obtained by a conventional technique.

### <Examples 559 to 669 and Comparative Examples 15 to 17>

In accordance with the foaming formulations shown in Table 23 to Table 26, hard polyurethane foams were foamed in a mold to form foams under the following foaming conditions, and then the thus obtained foams were removed from the mold and left to stand one day and night, followed by the measurement of various physical properties of the hard polyurethane foams. The measured values of physical properties are also shown in Table 23 to Table 26, respectively.

### (Foaming Conditions)

Mold SIZE: 40 cm × 40 cm × 5 cm (in height)
Mold temperature: 35°C
Mold material: Aluminum
Mixing method: High-pressure urethane foaming machine (manufactured by Polymer Engineering Co., LTD.)
A polyol premix was mixed with an isocyanate under 12 MPa.

As raw materials of hard polyurethane foams in Examples 559 to 669 and Comparative Examples 15 to 17, the same raw materials as those exemplified in the above-mentioned Examples were used, and other materials are as follows.

### 1. Catalyst

Catalyst-4: "U-CAT 1000" manufactured by San-Apro Ltd. (an amine-based catalyst)

### 2. Foam stabilizer

Foam stabilizer-3: "SF-2936F" manufactured by Dow Corning Toray Co., Ltd.

### 3. Organic isocyanate component (D-3)

"MILLIONATE MR-200" manufactured by Nippon Polyurethane Industry Co., Ltd. (polymeric MDI)

### 4. Polyol

(1) Polyol (P-7): A polyoxypropylene polyol having an average number of functional groups of 8.0 and a hydroxyl value of 490 obtained by addition of PO to sucrose.
(2) Polyol (P-8) : A polyoxypropylene polyol having an average number of functional groups of 4.0 and a hydroxyl value of 410 obtained by addition of PO to pentaerythritol.
(3) Polyol (P-9) : A polyoxypropylene polyol having an average number of functional groups of 6.0 and a hydroxyl value of 400 obtained by addition of PO to sorbitol.

### 5. Flame retardant

Flame retardant-1: "TMCPP" manufactured by DAIHACHI CHEMICAL INDUSTRY CO., LTD. (tris(β-chloropropylphosphate)

### 6. Foaming agent

Foaming agent-1: "HFC-245fa" manufactured by Central Glass Co., Ltd. (1,1,1,3,3,-pentafluoropropane)

Methods for measurement of the respective items are as follows. The obtained results are shown in Table 23 to Table 26.
Density: measured in accordance with JIS A9511, unit is kg/m³ Compressive strength: measured in accordance with JIS A9511, unit is kPa

**[Table 23]**

| Example | Strength-improving agent | Mixing formulation (Parts by weight) | | | | | | | | | | Physical properties of foam | |
|---|---|---|---|---|---|---|---|---|---|---|---|---|---|
| | | Polyol component | | | | Catalyst | Foam stabilizer -3 | Foaming agent | | Flame retardant-1 | Isocyanate D-3 INDEX | Density | Compressive strength |
| | Product No. | Strength-improving agent | P-7 | P-8 | P-9 | Catalyst-4 | | Water | Foaming agent-1 | | | kg/m³ | kPa |
| 559 | A-4 | 10 | 90 | | | 2 | 1.5 | 2 | 35 | 10 | 110 | 40.0 | 190 |
| 560 | A-6 | 10 | 90 | | | 2 | 1.5 | 2 | 35 | 10 | 110 | 39.2 | 187 |
| 561 | A-12 | 10 | 90 | | | 2 | 1.5 | 2 | 35 | 10 | 110 | 39.3 | 204 |
| 562 | A-13 | 10 | 90 | | | 2 | 1.5 | 2 | 35 | 10 | 110 | 39.1 | 199 |
| 563 | A-14 | 10 | 90 | | | 2 | 1.5 | 2 | 35 | 10 | 110 | 39.9 | 187 |
| 564 | A-15 | 10 | 90 | | | 2 | 1.5 | 2 | 35 | 10 | 110 | 39.1 | 197 |
| 565 | A-19 | 10 | 90 | | | 2 | 1.5 | 2 | 35 | 10 | 110 | 39.0 | 188 |
| 566 | A-20 | 10 | 90 | | | 2 | 1.5 | 2 | 35 | 10 | 110 | 39.5 | 195 |
| 567 | A-23 | 10 | 90 | | | 2 | 1.5 | 2 | 35 | 10 | 110 | 39.7 | 203 |
| 568 | A-26 | 10 | 90 | | | 2 | 1.5 | 2 | 35 | 10 | 110 | 39.0 | 192 |
| 569 | A-28 | 10 | 90 | | | 2 | 1.5 | 2 | 35 | 10 | 110 | 39.0 | 200 |
| 570 | A-29 | 10 | 90 | | | 2 | 1.5 | 2 | 35 | 10 | 110 | 39.0 | 208 |
| 571 | A-30 | 10 | 90 | | | 2 | 1.5 | 2 | 35 | 10 | 110 | 39.2 | 198 |
| 572 | A-31 | 10 | 90 | | | 2 | 1.5 | 2 | 35 | 10 | 110 | 39.7 | 196 |
| 573 | A-33 | 10 | 90 | | | 2 | 1.5 | 2 | 35 | 10 | 110 | 39.3 | 204 |
| 574 | A-35 | 10 | 90 | | | 2 | 1.5 | 2 | 35 | 10 | 110 | 39.5 | 202 |
| 575 | A-37 | 10 | 90 | | | 2 | 1.5 | 2 | 35 | 10 | 110 | 39.5 | 208 |
| 576 | A-38 | 10 | 90 | | | 2 | 1.5 | 2 | 35 | 10 | 110 | 39.0 | 215 |
| 577 | A-39 | 10 | 90 | | | 2 | 1.5 | 2 | 35 | 10 | 110 | 39.9 | 204 |
| 578 | A-40 | 10 | 90 | | | 2 | 1.5 | 2 | 35 | 10 | 110 | 39.4 | 203 |
| 579 | A-42 | 10 | 90 | | | 2 | 1.5 | 2 | 35 | 10 | 110 | 39.9 | 190 |
| 580 | A-43 | 10 | 90 | | | 2 | 1.5 | 2 | 35 | 10 | 110 | 40.0 | 213 |
| 581 | A-45 | 10 | 90 | | | 2 | 1.5 | 2 | 35 | 10 | 110 | 39.1 | 203 |
| 582 | A-49 | 10 | 90 | | | 2 | 1.5 | 2 | 35 | 10 | 110 | 39.3 | 208 |
| 583 | A-52 | 10 | 90 | | | 2 | 1.5 | 2 | 35 | 10 | 110 | 39.0 | 171 |
| 584 | A-54 | 10 | 90 | | | 2 | 1.5 | 2 | 35 | 10 | 110 | 39.6 | 171 |
| 585 | A-56 | 10 | 90 | | | 2 | 1.5 | 2 | 35 | 10 | 110 | 39.7 | 171 |

**[Table 24]**

| Example | Strength-improving agent | Mixing formulation (Parts by weight) | | | | | | | | | | Physical properties of foam | |
|---|---|---|---|---|---|---|---|---|---|---|---|---|---|
| | | Polyol component | | | | Catalyst | Foam stabilizer-3 | Foaming agent | | Flame retardant-1 | Isocyanate D-3 INDEX | Density | Compressive strength |
| | Product No. | Strength-improving agent | P-7 | P-8 | P-9 | Catalyst-4 | | Water | Foaming agent-1 | | | kg/m³ | kPa |
| 586 | A-58 | 10 | 90 | | | 2 | 1.5 | 2 | 35 | 10 | 110 | 39.3 | 171 |
| 587 | A-60 | 10 | 90 | | | 2 | 1.5 | 2 | 35 | 10 | 110 | 39.2 | 209 |
| 588 | A-62 | 10 | 90 | | | 2 | 1.5 | 2 | 35 | 10 | 110 | 39.0 | 216 |
| 589 | A-62 | 50 | 50 | | | 2 | 1.5 | 2 | 35 | 10 | 110 | 39.8 | 227 |
| 590* | A-62 | 100 | 0 | | | 2 | 1.5 | 2 | 35 | 10 | 110 | 39.9 | 224 |
| 591 | A-64 | 10 | 90 | | | 2 | 1.5 | 2 | 35 | 10 | 110 | 39.8 | 207 |
| 592 | A-66 | 10 | 90 | | | 2 | 1.5 | 2 | 35 | 10 | 110 | 39.4 | 214 |
| 593 | A-68 | 10 | 90 | | | 2 | 1.5 | 2 | 35 | 10 | 110 | 39.2 | 211 |
| 594 | A-69 | 10 | 90 | | | 2 | 1.5 | 2 | 35 | 10 | 110 | 39.7 | 206 |
| 595 | A-72 | 10 | 90 | | | 2 | 1.5 | 2 | 35 | 10 | 110 | 39.9 | 213 |
| 596 | A-74 | 10 | 90 | | | 2 | 1.5 | 2 | 35 | 10 | 110 | 39.7 | 207 |
| 597 | A-74 | 25 | 75 | | | 2 | 1.5 | 2 | 35 | 10 | 110 | 39.6 | 220 |
| 598 | A-74 | 40 | 60 | | | 2 | 1.5 | 2 | 35 | 10 | 110 | 39.3 | 226 |
| 599 | A-76 | 10 | 90 | | | 2 | 1.5 | 2 | 35 | 10 | 110 | 39.8 | 214 |
| 600 | A-78 | 10 | 90 | | | 2 | 1.5 | 2 | 35 | 10 | 110 | 39.7 | 206 |
| 601 | A-80 | 10 | 90 | | | 2 | 1.5 | 2 | 35 | 10 | 110 | 39.8 | 214 |
| 602 | A-86 | 10 | 90 | | | 2 | 1.5 | 2 | 35 | 10 | 110 | 39.3 | 206 |
| 603 | A-87 | 10 | 90 | | | 2 | 1.5 | 2 | 35 | 10 | 110 | 39.8 | 199 |
| 604 | A-88 | 10 | 90 | | | 2 | 1.5 | 2 | 35 | 10 | 110 | 39.6 | 199 |
| 605 | A-89 | 10 | 90 | | | 2 | 1.5 | 2 | 35 | 10 | 110 | 39.9 | 199 |
| 606 | A-93 | 10 | 90 | | | 2 | 1.5 | 2 | 35 | 10 | 110 | 39.7 | 189 |
| 607 | A-94 | 10 | 90 | | | 2 | 1.5 | 2 | 35 | 10 | 110 | 39.5 | 197 |
| 608 | A-97 | 10 | 90 | | | 2 | 1.5 | 2 | 35 | 10 | 110 | 39.3 | 205 |
| 609 | A-98 | 10 | 90 | | | 2 | 1.5 | 2 | 35 | 10 | 110 | 39.9 | 176 |
| 610 | A-99 | 10 | 90 | | | 2 | 1.5 | 2 | 35 | 10 | 110 | 39.3 | 172 |
| 611 | A-100 | 10 | 90 | | | 2 | 1.5 | 2 | 35 | 10 | 110 | 39.9 | 193 |
| 612 | A-102 | 10 | 90 | | | 2 | 1.5 | 2 | 35 | 10 | 110 | 39.2 | 202 |
| 613 | A-103 | 10 | 90 | | | 2 | 1.5 | 2 | 35 | 10 | 110 | 39.9 | 209 |
| 614 | A-104 | 10 | 90 | | | 2 | 1.5 | 2 | 35 | 10 | 110 | 39.2 | 201 |
| 615 | A-105 | 10 | 90 | | | 2 | 1.5 | 2 | 35 | 10 | 110 | 39.9 | 202 |

| | | | | | | | | | | | | | |
|---|---|---|---|---|---|---|---|---|---|---|---|---|---|
| * = not claimed | | | | | | | | | | | | | |

**[Table 25]**

| Example | Strength-improving agent | Mixing formulation (Parts by weight) | | | | | | | | | | Physical properties of foam | |
|---|---|---|---|---|---|---|---|---|---|---|---|---|---|
| | | Polyol ccnponent | | | | Catalyst | Foam stabilizer-3 | Foaming agent | | Flame retardant-1 | Isocyanate D-3 INDEX | Density | Compressive strength |
| | Product No. | Strength-improving agent | P-7 | P-8 | P-9 | Catalyst-4 | | Water | Foaming agent-1 | | | kg/m³ | kPa |
| 616 | A-106 | 10 | 90 | | | 2 | 1.5 | 2 | 35 | 10 | 110 | 39.2 | 196 |
| 617 | A-109 | 10 | 90 | | | 2 | 1.5 | 2 | 35 | 10 | 110 | 39.8 | 213 |
| 618 | A-110 | 10 | 90 | | | 2 | 1.5 | 2 | 35 | 10 | 110 | 39.2 | 216 |
| 619 | A-111 | 10 | 90 | | | 2 | 1.5 | 2 | 35 | 10 | 110 | 39.6 | 216 |
| 620 | A-112 | 10 | 90 | | | 2 | 1.5 | 2 | 35 | 10 | 110 | 39.1 | 210 |
| 621 | A-113 | 10 | 90 | | | 2 | 1.5 | 2 | 35 | 10 | 110 | 40.0 | 205 |
| 622 | A-114 | 10 | 90 | | | 2 | 1.5 | 2 | 35 | 10 | 110 | 39.4 | 205 |
| 623 | A-121 | 10 | 90 | | | 2 | 1.5 | 2 | 35 | 10 | 110 | 39.5 | 204 |
| 624 | A-122 | 10 | 90 | | | 2 | 1.5 | 2 | 35 | 10 | 110 | 39.5 | 198 |
| 625 | A-125 | 10 | 90 | | | 2 | 1.5 | 2 | 35 | 10 | 110 | 39.9 | 203 |
| 626 | A-126 | 10 | 90 | | | 2 | 1.5 | 2 | 35 | 10 | 110 | 39.9 | 197 |
| 627 | A-129 | 10 | 90 | | | 2 | 1.5 | 2 | 35 | 10 | 110 | 39.8 | 165 |
| 628 | A-130 | 2 | 98 | | | 2 | 1.5 | 2 | 35 | 10 | 110 | 39.7 | 159 |
| 629 | A-130 | 10 | 90 | | | 2 | 1.5 | 2 | 35 | 10 | 110 | 40.0 | 165 |
| 630 | A-130 | 25 | 75 | | | 2 | 1.5 | 2 | 35 | 10 | 110 | 39.4 | 168 |
| 631 | A-131 | 10 | 90 | | | 2 | 1.5 | 2 | 35 | 10 | 110 | 39.5 | 164 |
| 632 | A-132 | 2 | 98 | | | 2 | 1.5 | 2 | 35 | 10 | 110 | 39.8 | 158 |
| 633 | A-132 | 10 | 90 | | | 2 | 1.5 | 2 | 35 | 10 | 110 | 39.3 | 164 |
| 634 | A-132 | 15 | 85 | | | 2 | 1.5 | 2 | 35 | 10 | 110 | 39.4 | 165 |

| Comparative Example | | | | | | | | | | | | | |
|---|---|---|---|---|---|---|---|---|---|---|---|---|---|
| 15 | - | - | 100 | | | 2 | 1.5 | 2 | 35 | 10 | 110 | 39.6 | 154 |
| 16 | - | - | 80 | 20 | | 2 | 1.5 | 2 | 35 | 10 | 110 | 39.3 | 146 |
| 17 | - | - | 70 | | 30 | 2 | 1.5 | 2 | 35 | 10 | 110 | 40.0 | 151 |

**[Table 26]**

| Example | Strength-improving agent | Mixing formulation (Parts by weight) | | | | | | | | | | Physical properties of foam | |
|---|---|---|---|---|---|---|---|---|---|---|---|---|---|
| | | Polyol ccnponent | | | | Catalyst | Foam stabilizer-3 | Foaming agent | | Flame retardant-1 | Isocyanate D-3 INDEX | Density | Compressive strength |
| | Product No. | Strength-improving agent | P-7 | P-8 | P-9 | Catalyst-4 | | Water | Foaming agent-1 | | | kg/m³ | kPa |
| 635* | B-9 | 100 | | | | 2 | 1.5 | 2 | 35 | 10 | 110 | 39.3 | 171 |
| 636* | B-10 | 90 | 10 | | | 2 | 1.5 | 2 | 35 | 10 | 110 | 39.0 | 179 |
| 637 | B-11 | 80 | 20 | | | 2 | 1.5 | 2 | 35 | 10 | 110 | 39.6 | 185 |
| 638 | B-12 | 40 | 60 | | | 2 | 1.5 | 2 | 35 | 10 | 110 | 39.0 | 193 |
| 639* | B-21 | 100 | | | | 2 | 1.5 | 2 | 35 | 10 | 110 | 39.4 | 186 |
| 640* | B-22 | 100 | | | | 2 | 1.5 | 2 | 35 | 10 | 110 | 40.0 | 198 |
| 641* | B-23 | 100 | | | | 2 | 1.5 | 2 | 35 | 10 | 110 | 39.8 | 208 |
| 642 | B-24 | 60 | 40 | | | 2 | 1.5 | 2 | 35 | 10 | 110 | 39.3 | 220 |
| 643* | B-31 | 100 | | | | 2 | 1.5 | 2 | 35 | 10 | 110 | 40.0 | 182 |
| 644* | B-32 | 90 | 10 | | | 2 | 1.5 | 2 | 35 | 10 | 110 | 39.8 | 193 |
| 645 | B-33 | 80 | 20 | | | 2 | 1.5 | 2 | 35 | 10 | 110 | 39.4 | 201 |
| 646* | B-40 | 100 | | | | 2 | 1.5 | 2 | 35 | 10 | 110 | 39.6 | 159 |
| 647 | B-41 | 80 | 20 | | | 2 | 1.5 | 2 | 35 | 10 | 110 | 39.8 | 169 |
| 648 | B-42 | 70 | 30 | | | 2 | 1.5 | 2 | 35 | 10 | 110 | 39.0 | 177 |
| 649 | B-49 | 80 | 20 | | | 2 | 1.5 | 2 | 35 | 10 | 110 | 39.3 | 164 |
| 650 | B-50 | 80 | 20 | | | 2 | 1.5 | 2 | 35 | 10 | 110 | 39.5 | 177 |
| 651 | B-51 | 60 | 40 | | | 2 | 1.5 | 2 | 35 | 10 | 110 | 39.8 | 183 |
| 652* | B-62 | 100 | | | | 2 | 1.5 | 2 | 35 | 10 | 110 | 39.1 | 180 |
| 653* | B-63 | 100 | | | | 2 | 1.5 | 2 | 35 | 10 | 110 | 39.9 | 192 |
| 654* | B-64 | 100 | | | | 2 | 1.5 | 2 | 35 | 10 | 110 | 39.1 | 202 |
| 655 | B-65 | 70 | 30 | | | 2 | 1.5 | 2 | 35 | 10 | 110 | 39.3 | 217 |
| 656 | B-66 | 40 | 60 | | | 2 | 1.5 | 2 | 35 | 10 | 110 | 39.7 | 220 |
| 657* | B-73 | 100 | | | | 2 | 1.5 | 2 | 35 | 10 | 110 | 39.2 | 184 |
| 658* | B-74 | 90 | 10 | | | 2 | 1.5 | 2 | 35 | 10 | 110 | 39.7 | 196 |
| 659 | B-75 | 50 | 50 | | | 2 | 1.5 | 2 | 35 | 10 | 110 | 39.1 | 197 |
| 660* | B-82 | 100 | | | | 2 | 1.5 | 2 | 35 | 10 | 110 | 39.3 | 177 |
| 661* | B-83 | 90 | 10 | | | 2 | 1.5 | 2 | 35 | 10 | 110 | 39.9 | 189 |
| 662 | B-84 | 70 | 30 | | | 2 | 1.5 | 2 | 35 | 10 | 110 | 39.0 | 195 |
| 663* | B-93 | 90 | | | 10 | 2 | 1.5 | 2 | 35 | 10 | 110 | 39.1 | 180 |
| 664* | B-94 | 90 | | | 10 | 2 | 1.5 | 2 | 35 | 10 | 110 | 39.9 | 192 |
| 665* | B-95 | 90 | | 10 | | 2 | 1.5 | 2 | 35 | 10 | 110 | 39.2 | 202 |
| 666 | B-96 | 40 | 40 | 20 | | 2 | 1.5 | 2 | 35 | 10 | 110 | 39.0 | 210 |
| 667* | B-103 | 100 | | | | 2 | 1.5 | 2 | 35 | 10 | 110 | 40.0 | 176 |
| 668* | B-104 | 90 | 10 | | | 2 | 1.5 | 2 | 35 | 10 | 110 | 39.6 | 185 |
| 669 | B-105 | 70 | 30 | | | 2 | 1.5 | 2 | 35 | 10 | 110 | 39.4 | 191 |

| Comparative Example | | | | | | | | | | | | | |
|---|---|---|---|---|---|---|---|---|---|---|---|---|---|
| 15 | - | - | 100 | | | 2 | 1.5 | 2 | 35 | 10 | 110 | 39.6 | 154 |
| 16 | - | - | 80 | 20 | | 2 | 1.5 | 2 | 35 | 10 | 110 | 39.3 | 146 |
| 17 | - | - | 70 | | 30 | 2 | 1.5 | 2 | 35 | 10 | 110 | 40.0 | 151 |

| | | | | | | | | | | | | | |
|---|---|---|---|---|---|---|---|---|---|---|---|---|---|
| * = not claimed | | | | | | | | | | | | | |

In Table 23 to Table 26, the urethane foams of Examples 559 to 669 of the present invention are improved in physical properties of the foam, particularly compressive strength as compared with the urethane foams of Comparative Examples 15 to 17 obtained by a conventional technique.

### INDUSTRIAL APPLICABILITY

The polyurethane foam of the present invention can be suitably used in all applications of a polyurethane foam, such as vehicle seats, furniture, building materials, beddings, apparel clothing, electric devices, electronic devices, packaging, and other applications (sanitary requisites and cosmetics).

## Claims

1. A polyol composition (B) for the production of polyurethane foam, comprising a strength-improving agent (A) for the production of polyurethane foam, represented by the following general formula (I) and a polyol (P) selected from polyhydric alcohols, polyether polyols and polyester polyols different from the strength-improving agent (A), wherein the content of (A) is 0.5 to 80% by weight based on the weight of (B), 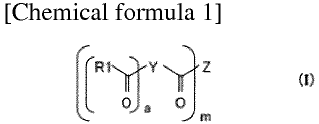 wherein R1 represents a residue derived from an active-hydrogen containing compound by the removal of one active hydrogen atom, and multiple R1s may be the same or different; Y represents a residue derived from an at least trivalent aromatic polycarboxylic acid (C) by the removal of the carboxyl groups, and the aromatic ring of Y is composed of carbon atoms, and substituents on the aromatic ring may be hydrogen atoms or other substituents and at least one of the substituents is a hydrogen atom; a is an integer satisfying a relation: 2 ≤ a ≤ (number of substituents on the aromatic ring - 2); Z represents a residue derived from an at least m-valent active-hydrogen containing compound by the removal of m active hydrogen atoms; some R1s and Z may be the same, with the proviso that at least one R1 is different from Z; and m represents an integer of 1 to 10.

2. The polyol composition (B) for the production of polyurethane foam according to claim 1, wherein the hydroxyl value of (A) is 0 to 700 mgKOH/g.

3. The polyol composition (B) for the production of polyurethane foam according to claim 1 or 2, wherein the aromatic ring concentration (mmol/g) of (A) is 0.1 to 10.0.

4. The polyol composition (B) for the production of polyurethane foam according to any one of claims 1 to 3, wherein the content of Y in (A) is 0.5 to 50% by weight based on the number average molecular weight of (A).

5. A method for producing a polyurethane foam, which comprises reacting the polyol composition (B) for the production of polyurethane foam according to any one of claims 1 to 4 with an organic polyisocyanate component (D) in the presence of a foaming agent, a catalyst and a foam stabilizer.

## Patentansprüche

1. Polyolzusammensetzung (B) zur Herstellung von Polyurethanschaum, umfassend ein Festigkeitserhöhungsmittel (A) für die Herstellung von Polyurethanschaum gemäß der folgenden allgemeinen Formel (I) und ein Polyol (P) ausgewählt aus mehrwertigen Alkoholen, Polyetherpolyolen und Polyesterpolyolen, die sich von dem Festigkeitserhöhungsmittel (A) unterscheiden, wobei der Gehalt an (A) 0,5 bis 80 Gew.-%, bezogen auf das Gewicht von (B), beträgt. 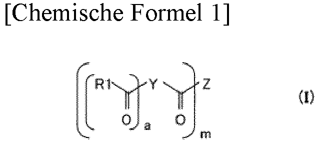 wobei R1 einen Rest darstellt, der von einer aktiven Wasserstoff enthaltenden Verbindung durch das Entfernen eines aktiven Wasserstoffatoms erhalten wird, und mehrere R1-Reste gleich oder verschieden sein können; Y einen Rest darstellt, der von einer mindestens dreiwertigen aromatischen Polycarbonsäure (C) durch das Entfernen der Carboxylgruppen erhalten wird, und der aromatische Ring von Y aus Kohlenstoffatomen besteht, und Substituenten an dem aromatischen Ring Wasserstoffatome oder andere Substituenten sein können, wobei mindestens einer der Substituenten ein Wasserstoffatom ist; a eine ganze Zahl ist, die eine Beziehung: 2 ≤ a ≤ (Anzahl der Substituenten an dem aromatischen Ring - 2) erfüllt; Z einen Rest darstellt, der von einer mindestens m-wertigen aktiven Wasserstoff enthaltenden Verbindung durch das Entfernen von m aktiven Wasserstoffatomen erhalten wird; wobei einige R1-Reste und Z gleich sein können, mit der Maßgabe, dass sich mindestens ein R1-Rest von Z unterscheidet; und m eine ganze Zahl von 1 bis 10 darstellt.

2. Polyolzusammensetzung (B) zur Herstellung von Polyurethanschaum gemäß Anspruch 1, wobei der Hydroxylwert von (A) 0 bis 700 mgKOH/g beträgt.

3. Polyolzusammensetzung (B) zur Herstellung von Polyurethanschaum gemäß Anspruch 1 oder 2, wobei der Gehalt des aromatischen Rings (mmol/g) von (A) 0,1 bis 10,0 beträgt.

4. Polyolzusammensetzung (B) zur Herstellung von Polyurethanschaum gemäß irgendeinem der Ansprüche 1 bis 3, wobei der Gehalt an Y in (A) 0,5 bis 50 Gew.-%, bezogen auf das zahlenmittlere Molekulargewicht von (A), beträgt.

5. Verfahren zur Herstellung eines Polyurethanschaums, welches das Umsetzen der Polyolzusammensetzung (B) zur Herstellung von Polyurethanschaum gemäß irgendeinem der Ansprüche 1 bis 4 mit einer organischen Polyisocyanatkomponente (D) in Gegenwart eines Schaumbildners, eines Katalysators und eines Schaumstabilisators umfasst.

## Revendications

1. Composition de polyol (B) pour la production de mousse de polyuréthane, comprenant un agent d'amélioration de la résistance pour la production de mousse de polyuréthane, représenté par la formule générale (I) suivante et un polyol (P) choisi parmi les alcools polyhydriques, les polyols de polyéther et les polyols de polyester différents de l'agent d'amélioration de la résistance (A), la teneur de (A) étant de 0,5 à 80 % en poids sur la base du poids de (B), 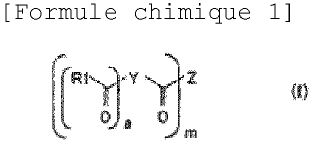 où R1 représente un résidu dérivé d'un composé contenant de l'hydrogène actif par le retrait d'un atome d'hydrogène actif, et de multiples R1 peuvent être identiques ou différents ; Y représente un résidu dérivé d'un acide polycarboxylique aromatique au moins trivalent (C) par le retrait des groupes carboxyle, et le cycle aromatique de Y est composé d'atomes de carbone, et des substituants sur le cycle aromatique peuvent être des atomes d'hydrogène ou d'autres substituants et au moins un des substituants est un atome d'hydrogène ; a est un nombre entier satisfaisant une relation 2 ≤ a ≤ (nombre de substituants sur le cycle aromatique - 2) ; Z représente un résidu dérivé d'un composé contenant de l'hydrogène actif au moins m-valent par le retrait de m atomes d'hydrogène actifs ; certains R1 et Z peuvent être identiques, à la condition qu'au moins un R1 est différent de Z ; et m représente un nombre entier de 1 à 10.

2. Composition de polyol (B) pour la production de mousse de polyuréthane selon la revendication 1, dans laquelle la valeur d'hydroxyle de (A) est de 0 à 700 mg KOH/g.

3. Composition de polyol (B) pour la production de mousse de polyuréthane selon la revendication 1 ou 2, dans laquelle la concentration de cycles aromatiques (mmoles/g) de (A) est de 0,1 à 10,0.

4. Composition de polyol (B) pour la production de mousse de polyuréthane selon l'une quelconque des revendications 1 à 3, dans laquelle la teneur de Y dans (A) est de 0,5 à 50 % en poids sur la base du poids moléculaire moyen en nombre de (A) .

5. Procédé de production d'une mousse de polyuréthane, qui comprend la mise à réagir de la composition de polyol (B) pour la production de mousse de polyuréthane selon l'une quelconque des revendications 1 à 4 avec un composant polyisocyanate organique (D) en présence d'un agent moussant, d'un catalyseur et d'un stabilisateur de mousse.
